# EUROPÄISCHE PATENTSCHRIFT

(11) **EP 2 929 291 B1**
(45) Veröffentlichungstag und Bekanntmachung des Hinweises auf die Patenterteilung: **23.08.2017**
(21) Anmeldenummer: 13799064.4
(22) Anmeldetag: 03.12.2013
(51) Int. Cl.: G01C 15/00

(54) **LASERSTRAHLHORIZONTALITÄTSTREUE-ÜBERPRÜFVORRICHTUNG UND EBENSOLCHES VERFAHREN**
DEVICE TESTING THE HORIZONTAL DISPERSION OF A LASER BEAM AND CORRESPONDING METHOD
DISPOSITIF DE VÉRIFICATION DE L'HORIZONTALITÉ D'UN FAISCEAU LASER ET PROCÉDÉ CORRESPONDANT

(30) Priorität: 05.12.2012 EP 12195754
(43) Veröffentlichungstag der Anmeldung: 14.10.2015
(73) Patentinhaber: Leica Geosystems AG, 9435 Heerbrugg (CH)
(72) Erfinder: DUMOULIN, Charles, Leopold, Elisabeth, CH-9436 Balgach (CH); PETERMANN, Marco, CH-9437 Marbach (CH)
(74) Vertreter: Gyaja, Christoph Benjamin
(86) Internationale Anmeldenummer: PCT/EP2013/075372
(87) Internationale Veröffentlichungsnummer: WO 2014/086773

(56) Entgegenhaltungen:
- EP-A1- 2 199 739
- WO-A1-2012/104112
- CN-U- 201 803 723
- US-A1- 2011 090 481

## Beschreibung

Die Erfindung betrifft eine Laserstrahlhorizontalitätstreue-Überprüfvorrichtung für ein Laserstrahl-Projektionsgerät für Arbeiten im Bau- und/oder Innenausbau, wobei das Laserstrahl-Projektionsgerät mit einer Strahl-Selbsthorizontierfunktionalität ausgestattet ist. Das Laserstrahl-Projektionsgerät ist insbesondere als ein Rotationslaser oder ein Linien- oder Punktlaser ausgebildet. Die Laserstrahlhorizontalitätstreue-Überprüfvorrichtung weist ein Teleskop mit einem Abschwächungsfilter, einem vergrössernd wirkenden Objektiv und einem flächigen Bildsensor zur Aufnahme eines Bildes von einem in das Objektiv einfallenden Laserstrahl auf. Bestandteile der Laserstrahlhorizontalitätstreue-Überprüfvorrichtung sind ausserdem ein Eigenneigungskompensator und eine Auswerteeinheit, die ausgebildet ist zur automatischen Ermittlung einer Bildposition des im Bild aufgenommenen Laserstrahls anhand von Bildverarbeitung.

Laserstrahl-Projektionsgeräte, wie beispielsweise Punktlaser, Linienlaser oder insbesondere Rotationslaser, finden insbesondere im Bau oder Innenausbau, beispielsweise zur Höhenmarkierung von Wänden, Einsatz. Ein Rotationslaser markiert durch seinen rotierenden Laserstrahl eine Referenzebene. Dabei kann der Laserstrahl selbst beispielsweise punkt-, linien- oder fächerförmig emittiert werden. Das Laserlicht kann als Dauerlicht oder gepulst erzeugt werden. Wichtig ist dabei, dass der Laserstrahl ebenentreu, insbesondere horizontalitätstreu ausgesandt wird, d.h., dass er genau in der vorgesehenen Ebene vebleibt, um Fehlmarkierungen ausschliessen zu können. Um dieses zu gewährleisten, sind übliche derartige Laser in der Regel mit einer Strahl-Selbsthorizontierfunktionalität ausgestattet. Zur Erfüllung einer solchen Strahl-Selbsthorizontierfunktionalität sind verschiedene technische Lösungen bekannt, die sowohl mechanischer als auch optischer Art sein können. Beispielsweise kann das Laser-Core-Modul pendelnd aufgehängt sein, so dass eine Horizontalitätstreue unter Ausnutzung der Gravitation erzeugt werden kann. Der Laser kann auch mit einem Neigungssensor, im einfachsten Fall beispielsweise einem Bubble-Sensor, ausgestattet sein, dessen Anzeige bzw. Signal ausgelesen und als Ausgangsgrösse für eine aktive Justierung des Lasers benutzt werden kann. Typischerweise erfolgt eine erste Justierung der Horizontalitätstreue und Kalibration der Strahl-Selbsthorizontierfunktionalität herstellerseits vor der Ausliefeung des Lasers.

Durch verschiedene äussere Einflüsse, wie beispielsweise Temperatur- und Feuchtigkeitsschwankungen, mechanische Erschütterungen wie Vibrationen etc. kann sich die Justierung des Lasers aber verändern. Daher ist es in regelmässigen Abständen oder im Bedarfsfall erforderlich, die Ebenen- bzw. Horizontalitätstreue des Lasers und seiner Strahl-Selbsthorizontierfunktionalität zu überprüfen, neu zu kalibrieren und den Laser gegebenenfalls nachzujustieren.

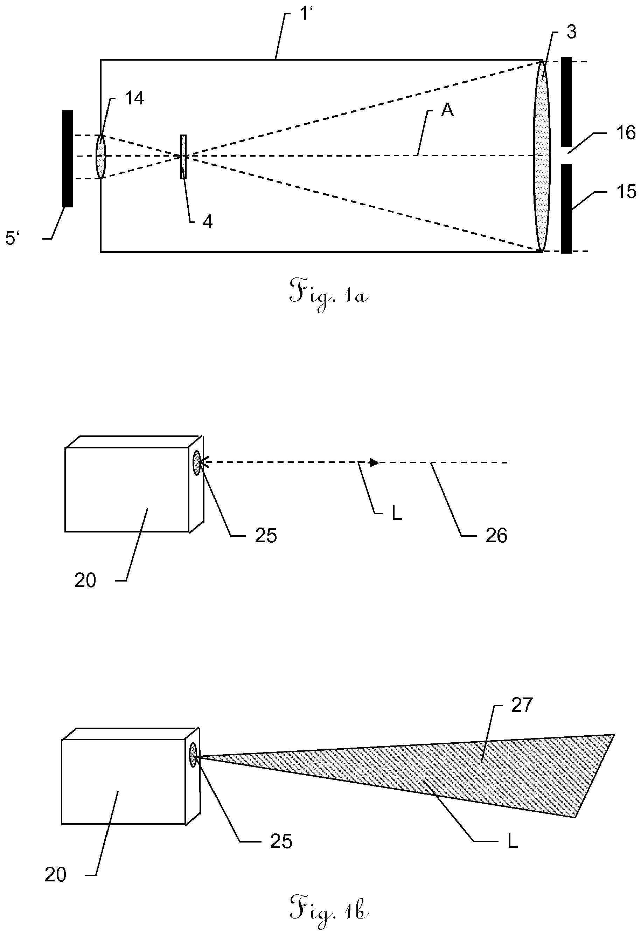

Zur Erfüllung dieser Aufgabe sind Laserstrahlhorizontalitätstreue-Überprüfvorrichtungen bekannt und im Stand der Technik beschrieben. Üblicherweise umfassen diese bekannten Vorrichtungen als Grundkomponenten ein Teleskop und einen Eigenneigungskompensator, mit dem sichergestellt werden soll, dass die optische Achse des Teleskops immer horizontal ausgerichtet ist. Dieses ist selbstverständlich erforderlich, um die Überprüfvorrichtung selbst perfekt horizontal ausrichten zu können, so dass damit die Horizontalitätstreue eines anderen Geräts überhaupt kontrolliert werden kann. Bei einer bekannten Laserstrahlhorizontalitätstreue-Überprüfvorrichtung, die unter Bezug auf Fig. 1a nachfolgend noch genauer beschrieben werden wird, hat das Teleskop ein Eingangsobjektiv, welches eine Bildebene aufweist, in der in der Ferne, d.h. in unendlichem Abstand befindliche Objekte, abgebildet werden. In Fortsetzungsrichtung der optischen Achse des Objektivs ist der Bildebene nachfolgend für einen Betrachter ein Okular angeordnet, hinter dem, für eine Überprüfung der Laserstrahlhorizontalitätstreue eines Laserstrahl-Projektionsgeräts ein flächiger Bildsensor, typischerweise eine Kamera, angeordnet ist, auf den ein eintreffender Laserstrahl abgebildet wird. Üblicherweise ist der Bildsensor mit seinem Zentrum auf der optischen Achse des Objektivs angeordnet. Vor dem Objektiv ist eine Blende mit einer zentralen lichtdurchlässigen Öffnung auf der optischen Achse des Objektivs angebracht, beispielsweise auf das Teleskop aufgeschraubt. Eine derartige auf dem Markt erhältliche Überprüfvorrichtung ist beispielsweise mit einem vor dem Objektiv angebrachten, in zwei Positionen einstellbaren optischen Filter ausgestattet, womit die in das Teleskop einfallende Intensität in zwei Stufen reduziert werden kann.

Eine derartige handelsübliche Überprüfvorrichtung weist eine Reihe von Nachteilen auf. Einerseits ist die damit erreichbare Genauigkeit bei der Überprüfung der Laserstrahlhorizontalitätstreue eines Laserstrahl-Projektionsgeräts sehr beschränkt, wie nachfolgend genauer begründet wird. Andererseits ist auch die Durchführung einer solchen Überprüfung aufwendig. Eine erste Gruppe von Nachteilen beruht auf der Abbildung des Laserstrahls über ein Okular. Ein Okular weist üblicherweise einen nur kleinen Durchmesser und eine kurze Brennweite, also eine starke Wölbung der Linsenoberfläche auf. Dadurch werden zwangsläufig erhebliche optische Verzerrungen über die Ausdehnung des Sichtfeldes erzeugt, wobei die Störung im Zentrum des Okulars am geringsten ist. Ausserdem ist typischerweise ein Okular in axialer Richtung über eine gewisse Distanz verschiebbar angeordnet, um eine Anpassung an die spezifischen Eigenschaften eines Betrachterauges zu ermöglichen. Dadurch ist zwangsläufig nur eine ungefähre, aber kaum eine hochgenaue Positionierung des Okulars, möglich. Besonders nachteilig für ein Messresultat ist eine relativ leicht auftretende, unbeabsichtigte Verkippung des Okulars bezüglich der optischen Achse des Objektivs. Dadurch wird ein Versatz eines eintreffenden Laserstrahls, der horizontal durch das Objektiv in das Teleskop eintritt und eigentlich auf den Schnittpunkt der optischen Achse mit dem flächigen Bildsensor abgebildet werden sollte, auf dem Bildsensor erzeugt, was dann fälschlicherweise eine tatsächlich gar nicht vorhandene Abweichung des Laserstrahls vom horizontalen Verlauf indiziert. Axiale Bewegungen bzw. Fehlpositionierungen des Okulars beeinträchtigen zusätzlich die Kollimation des Laserstrahls auf dem Bildsensor. Zusätzlich ist diese Vorrichtung erheblich anfällig gegen Vibrationen, und zwar umso stärker, je weiter entfernt von der Bildebene der Bildsensor angeordnet ist. Diese Vorrichtung erlaubt nur prinzipielle, d.h. "ja-nein"-Überprüfungen, ob eine Abweichung vom horizontalen Verlauf des Laserstrahls vorliegt. Jede Art von Quantifizierung einer solchen Abweichung und gar eine genauere Analyse zur Bestimmung der Ursache für eine solche Abweichung ist mit dieser Vorrichtung nicht möglich. Daher kann bei Feststellung einer Abweichung des ausgesandten Laserlichts eines untersuchten Laserstrahl-Projektionsgeräts von der Horizontalität diese bekannte Laserstrahlhorizontalitätstreue-Überprüfvorrichtung auch nicht dazu eingesetzt werden, um mit deren Hilfe das Laserstrahl-Projektionsgerät nachzujustieren, sondern dieses muss dann typischerweise trotzdem zum Service des Herstellers eingeschickt werden.

Darüber hinaus muss eine solche Überprüfvorrichtung, insbesondere wegen der störungsanfälligen Positionierung des auf den Bildsensor abbildenden Okulars, selbst regelmässig rekalibriert und gegebenenfalls nachjustiert werden, wofür bei bekannten solchen Vorrichtungen ein Service beim Hersteller erforderlich ist.

Neben der beschriebenen Vielzahl von Nachteilen hinsichtlich der erreichbaren optischen Messgenauigkeit ist diese Vorrichtung zur Überprüfung der Laserstrahlhorizontalitätstreue eines Laserstrahl-Projektionsgeräts für einen Bediener auch nur unter grossem Aufwand benutzbar. Die vor dem optischen Eingang des Teleskops angebrachte Blende mit ihrer zentralen Öffnung ist für diese Vorrichtung zwingend notwendig, um eine Unterscheidung eines zu korrigierenden, von der vorgesehenen Horizontalität abweichenden Einfall eines Laserstrahls von einem tatsächlich horizontal eintreffenden, also parallel zur optischen Achse verlaufenden, dazu aber senkrecht versetzt verlaufenden Laserstrahls zu ermöglichen. Letzteres würde bei dieser Vorrichtung ebenfalls zu einem Versatz des Auftreffpunkts des Laserstrahls auf dem Bildsensor führen. Dabei wäre es eigentlich sogar geboten, die Blendenöffnung möglichst klein zu bemessen, um die Unterscheidbarkeit und damit die Messgenauigkeit des Geräts zu verbessern. Für den Einsatz des Geräts bedeutet dieses aber, dass ein hinsichtlich seiner Laserstrahlhorizontalitätstreue zu überprüfender Laser mit seiner optischen Austrittsöffnung für den Laserstrahl sehr genau auf die Blendenöffnung ausgerichtet, d.h. bei erwünschtem horizontalem Laserstrahlverlauf auf der Höhe der optischen Achse des Objektivs positioniert werden muss. Dieses bedeutet hohe Anforderungen an einen Benutzer für eine genaue Positionierung des zu überprüfenden Laserstrahl-Projektionsgeräts. Diese beschriebene Problematik der gegenseitigen Höheneinstellung und Ausrichtung wird bei Überprüfung von unsichtbaren Laserstrahlen, beispielsweise infraroten Strahlen, nochmals erschwert, da hier die Blick-Kontrolle eines Benutzers bzw. die sichtbare Referenz bei der Aufstellung des zu überprüfenden Geräts vor dem Teleskop fehlt.

Die bekannten Laserstrahlhorizontalitätstreue-Überprüfvorrichtungen weisen damit nicht nur eine unzureichende optische Messgenauigkeit und eine nur sehr beschränkte Verwertbarkeit und damit nur geringen Nutzen der mit einer solchen Vorrichtung gewonnenen Messergebnisse auf, sondern sind von einem Benutzer auch nur unter grossem Aufwand zu bedienen.

Aufgabe der vorliegenden Erfindung ist es, diese Nachteile zu überwinden. Aufgabe der Erfindung ist es insbesondere, eine leicht bedienbare Laserstrahlhorizontalitätstreue-Überprüfvorrichtung für ein Laserstrahl-Projektionsgerät, das mit einer Strahl-Selbsthorizontierfunktionalität ausgestattet ist, bereitzustellen.

Eine besondere Aufgabe besteht darin, eine Laserstrahlhorizontalitätstreue-Überprüfvorrichtung bereitzustellen, mit der auch quantitative Messungen der Ebenentreue oder Horizontalitätstreue der Laseremission ermöglicht werden und diese Überprüfvorrichtung vorzugsweise für eine gegebenenfalls erforderliche Nachjustierung eines untersuchten Laserstrahl-Projektionsgeräts eingesetzt werden kann.

Diese Aufgaben werden durch die Verwirklichung der Merkmale der unabhängigen Ansprüche gelöst. Merkmale, die die Erfindung in vorteilhafter Weise weiterbilden, sind den abhängigen Patentansprüchen zu entnehmen.

Die Erfindung stellt eine Laserstrahlhorizontalitätstreue-Überprüfvorrichtung für ein Laserstrahl-Projektionsgerät für Arbeiten im Bau- und/oder Innenausbau zur Verfügung, wobei das Laserstrahl-Projektionsgerät mit einer Strahl-Selbsthorizontierfunktionalität ausgestattet ist. Das Laserstrahl-Projektionsgerät ist insbesondere als ein Rotationslaser oder ein Linien- oder Punktlaser ausgebildet. Die Laserstrahlhorizontalitätstreue-Überprüfvorrichtung weist ein Teleskop mit einem Abschwächungsfilter, einem vergrössernd wirkenden Objektiv und einem flächigen Bildsensor zur Aufnahme eines Bildes von einem in das Objektiv einfallenden Laserstrahl auf. Bestandteile der Laserstrahlhorizontalitätstreue-Überprüfvorrichtung sind ausserdem ein Eigenneigungskompensator und eine Auswerteeinheit, die ausgebildet ist zur automatischen Ermittlung einer Bildposition des im Bild aufgenommenen Laserstrahls anhand von Bildverarbeitung.

Erfindungsgemäss ist der flächige Bildsensor, bereitgestellt beispielsweise als ein CMOS- oder CCD-Chip und vorzugsweise mit Lichtempfondlichkeit nicht nur im sichtbaren, sondern auch infraroten Spektralbereich, wodurch die Benutzung der Vorrichtung mit infrarot emittierenden Geräten wie Totalstationen ermöglicht wird, in einer Bildebene des Objektivs angeordnet, und die Auswerteeinheit ist zusätzlich ausgebildet zur Durchführung einer Quantifizierung der Laserstrahlhorizontalitätstreue mit einer Übersetzung der ermittelten Bildposition in einen Laserstrahl-Neigungswert anhand von einer Übersetzungsregel, die mit Kalibrierparametern zusammenhängt, welche von einer Position des Bildsensors im Teleskop abhängig sind.

Im Vergleich zum Stand der Technik ist der Bildsensor erfindungsgemäss in der Bildebene des Teleskopobjektivs angeordnet. Dadurch wird, eine horizontale Ausrichtung der Laserstrahlhorizontalitätstreue-Überprüfvorrichtung selbst vorausgesetzt, jeder horizontal eintreffende Laserstrahl, auch wenn er parallel zur optischen Achse des Objektivs, aber mit einem dazu senkrechten Versatz, eintrifft, auf der optischen Achse auf den Bildsensor abgebildet, sofern er innerhalb der Apertur und von dem Objektiv des Teleskops erfasst wird. Daher ist das Teleskop mit seinem Objektiv blendenfrei ausgebildet, so dass der gesamte oder zumindest ein grosser Bereich der Querschnittsfläche des Objektivs als Apertur nutzbar ist.

Damit ist es lediglich noch erforderlich, den Laserstrahl auf die Apertur des Objektivs auszurichten, nicht aber mehr eine mehr oder minder kleine Öffnung einer vorgeschraubten Blende zu treffen, was den erforderlichen Aufwand für die Positionierung eines zu überprüfenden Laserstrahl-Projektionsgeräts erheblich reduziert.

Der Laserstrahl wird direkt über das Objektiv auf den Bildsensor in der Bildebene abgebildet, ohne dazwischen befindliche Zwischenbildebene und Okular. Dadurch entfallen alle Probleme, die mit einer für eine zufriedenstellende Messgenauigkeit erforderlichen genauen Positionierung eines Okulars verbunden sind, ebenso eine Störungsanfälligkeit gegenüber Vibrationen.

Durch die erfindungsgemässen spezifischen Merkmale wird eine Quantifizierung der Laserstrahlhorizontalitätstreue mit einer Übersetzung der ermittelten Bildposition in einen Laserstrahl-Neigungswert anhand von einer Übersetzungsregel, die mit Kalibrierparametern zusammenhängt, welche von einer Position des Bildsensors im Teleskop abhängig sind, ermöglicht.

Durch die letztgenannten zusätzlichen Merkmale der Auswerteeinheit wird vorteilhaft, im Gegensatz zum Stand der Technik, ermöglicht, das Ausmass einer Abweichung eines Laserstrahls von der Horizontalitätstreue zu quantifizieren und sogar auch noch, insbesondere basierend auf der quantitativen Art der bestimmten Abweichungsdaten, daraus Hinweise für eine Diagnose und Identifizierung der Ursache solcher Abweichungen zu gewinnen und gegebenenfalls eine Überprüfung einer Nachjustierung des Lasers beim Benutzer selbst zu ermöglichen.

Gemäss einer Ausführungsform der erfindungsgemässen Laserstrahlhorizontalitätstreue-Überprüfvorrichtung ist der Abschwächungsfilter derart ausgebildet, dass eine Vielzahl von unterschiedlichen Abschwächungsgraden bereitgestellt ist, aus welchen benutzerseitig jeweils ein Abschwächungsgrad wählbar und einstellbar ist oder durch Auswertung von einem Test-Bild, das von dem in das Objektiv einfallenden Laserstrahl aufgenommenen wird, ein Abschwächungsgrad automatisch ausgewählt und einzustellen veranlasst wird. Bevorzugt ist der Abschwächungsfilter derart ausgebildet, dass in einem breiten Abschwächungsgrad-Bereich stufenlos jeweils ein Abschwächungsgrad wählbar und einstellbar ist. Dabei ist es besonders vorteilhaft, wenn der Abschwächungsfilter mindestens einen drehbar angeordneten linearen Polarisator aufweist, im Speziellen zwei oder mehrere gegeneinander drehbar angeordnete lineare Polarisatoren. Im Falle einer linear polarisierten zu detektierenden Laserstrahlung ist bereits ein einziger linearer Polarisator ausreichend, um den breitest möglichen Abschwächungsbereich, zwischen 0 % (parallele Polarisation) und 100 % (gekreuzte Polarisation), einzustellen. Des Weiteren wird bevorzugt, dass sich der Abschwächungsfilter im Wesentlichen gleichmässig über die gesamte Objektivquerschnittsfläche als Apertur erstreckt.

Vorteilhaft sind das Teleskop derart blendenfrei ausgebildet und der Bildsensor und das Objektiv derart im Teleskop zusammenwirkend angeordnet, dass durch den Bildsensor ein einfallender Laserstrahl über mindestens einen weiten Teil der Objektivquerschnittfläche als Apertur erfassbar ist, insbesondere im Wesentlichen über die gesamte Objektivquerschnittfläche.

Der Eigenneigungskompensator der erfindungsgemässen Laserstrahlhorizontalitätstreue-Überprüfvorrichtung kann beispielsweise ausgebildet sein als ein opto-mechanischer Selbsthorizontierer mit einem im Strahlengang des Teleskops zwischen dem Objektiv und dem Bildsensor angeordneten opto-mechanischen Element, in einem einfachen Fall z.B. als ein Bubble-Sensor bzw. -Vial, zur Selbsthorizontierung der optischen Achse des Teleskops, oder als ein elektronischer Neigungsberücksichtiger mit einem hochpräzisen Neigungssensor zur Bestimmung eines von einer aktuellen Neigungsstellung des Teleskops abhängigen Teleskop-Neigungswertes, wobei der Teleskop-Neigungswert durch die Auswerteeinheit automatisch berücksichtigt wird bei einer automatisch durchgeführten Übersetzung der Bildposition in einen Laserstrahl-Neigungswert.

Gemäss einer möglichen Ausführungsform der Erfindung ist zusätzlich im Teleskop ein im Strahlengang dem Objektiv nachgeordnetes Fokussierglied vorgesehen, das axial verstellbar ist.

Gemäss einer weiteren Ausführungsform weist das Teleskop einen im Strahlengang angeordneten Strahlteiler zur Aufteilung des Strahlengangs in einen ersten Kanal und einen zweiten Kanal auf derart, dass im ersten Kanal eine erste Bildebene des Objektivs und im zweiten Kanal eine zweite Bildebene des Objektivs erzeugt wird. Dabei ist in der ersten Bildebene der Bildsensor angeordnet, und in der zweiten Bildebene sind eine einen Indikator für die optische Achse tragende Optik, insbesondere mit Fadenkreuz, und ein dieser Optik nachgeordnetes Okular zur mit dem Auge eines Benutzers erfolgenden Betrachtung des in der zweiten Bildebene erzeugten Zwischenbilds angeordnet. Für diese Ausführungsform ist typischerweise die genaue Justierung des Indikators bzw. Fadenkreuzes in der zweiten Bildebene beim Hersteller vorzunehmen, wobei im allgemeinen eine spätere Nachjustierung nicht erforderlich ist wegen der festen, nicht störungsanfälligen Positionierung innerhalb des Teleskops. Auch die Positionierung des Bildsensors in der ersten Bildebene ist nicht störungsanfällig, so dass typischerweise nach einer Erstjustierung und Kalibration des Geräts beim Hersteller nachfolgende Justierungen und Kalibrationen nicht mehr erforderlich sind.

In der Auswerteeinheit gespeicherte Kalibrierparameter stehen z.B. für die Abbildungsposition der optischen Achse des Objektivs im Bild sowie insbesondere eine Richtung im Bild, die für eine - hypothetisch durch einen reinen Horizontalitätsfehler bewirkte - Versatzrichtung einer Laserstrahl-Auftreffposition auf dem Bildsensor steht.

Für die Übersetzung der ermittelten Bildposition in einen Laserstrahl-Neigungswert wird bevorzugt ein im Bild zwischen der Bildposition und der Abbildungsposition in jener Richtung vorhandener Abstand bestimmt, die als Richtung angenommen wird oder in den Kalibrierparametern abgelegt ist, die für eine - hypothetisch durch einen reinen Horizontalitätsfehler bewirkte - Versatzrichtung einer Laserstrahl-Auftreffposition auf dem Bildsensor steht. Dieser Abstand kann - insbesondere entsprechend eines durch das Objektiv-Abbildungsverhältnis definierten Übersetzungs-Faktors - in den Laserstrahl-Neigungswert übersetzt werden.

Gemäss einer weiteren Ausführungsform der Erfindung ist für die Auswerteeinheit in einem Speicher abrufbar für verschiedene Laserstrahlquerschnittsformen jeweils ein Muster, insbesondere eine Schablone, gespeichert. Des Weiteren ist gemäss dieser Ausführungsform ein mit der Laserstrahlquerschnittsform des einfallenden Laserstrahls korrespondierendes Muster benutzerseitig auswählbar oder wird automatisch durch Bildverarbeitung mit Merkmalserkennung ausgewählt. Dabei wird durch die Auswerteeinheit bei der Ermittlung der Bildposition das ausgewählte Muster anhand einer Best-Fit-Methode im Bild mit dem aufgenommenen Laserstrahl in Übereinstimmung gebracht, insbesondere mit Subbildpunktgenauigkeit, und anhand der in Übereinstimmung gebrachten Lage des Musters im Bild wird die Bildposition des im Bild aufgenommenen Laserstrahls bestimmt. Durch die Erfindung wird ermöglicht, dass dieses insbesondere mit Subbildpunktgenauigkeit erfolgen kann, wobei insbesondere für jedes gespeicherte Muster eine Information mitgespeichert ist, die eine musterintern definierte, für die letztendliche Ermittlung der Bildposition heranzuziehende Muster-Position innerhalb des Musters ableiten lässt. im Speziellen weist dabei die Information die musterintern definierte Muster-Position ist oder ein definierter Muster-Positions-Bestimmungsalgorithmus, wie etwa ein Musterschwerpunkt-Bestimmungsalgorithmus.

Gemäss einer weiteren Ausführungsform weist die erfindungsgemässe Laserstrahlhorizontalitätstreue-Überprüfvorrichtung des Weiteren eine Funktionalität zur Überprüfung einer Laserstrahlneigungstreue speziell für ein derart ausgebildetes Laserstrahl-Projektionsgerät auf, welches eine Strahl-Neigungsfunktion mit benutzerseitig definiert wählbarer und - insbesondere nach Wahl sich selbsttätig - einstellbarer Soll-Neigung für den Laserstrahl aufweist. Dieses betrifft insbesondere ein als Neigungs-Rotationslaser mit automatischem Single- oder Dual-Slope-Mechanismus ausgebildetes Laserstrahl-Projektionsgerät. Dabei ist erfindungsgemäss im Rahmen der Funktionalität zur Überprüfung der Laserstrahlneigungstreue, nach Einstellung der definierten Soll-Neigung für den Laserstrahl am Laserstrahl-Projektionsgerät, eine durch den Bildsensor erfolgende Aufnahme eines Bildes von dem in das Objektiv einfallenden Laserstrahl auslösbar, und durch die Auswerteeinheit werden automatisch die folgenden Schritte durchgeführt:
- Ermittlung einer Bildposition des im Bild aufgenommenen Laserstrahls und
- Quantifizierung der Laserstrahlneigungstreue mit einer Übersetzung der ermittelten Bildposition in einen Laserstrahl-Neigungswert anhand von einer von den gespeicherten Kalibrierparametern abhängigen Übersetzungsregel, sodass der dabei erhaltene Laserstrahl-Neigungswert mit der definiert am Laserstrahl-Projektionsgerät eingestellten Soll-Neigung vergleichbar ist.

Gemäss einer weiteren Ausführungsform der erfindungsgemässen Laserstrahlhorizontalitätstreue-Überprüfvorrichtung ist die Auswerteeinheit als Steuer- und Auswerteinheit ausgebildet und wird eine nach Auslösung völlig automatisch ablaufende Funktionalität zur Überprüfung der Laserstrahlhorizontalitätstreue bereitgestellt, in deren Rahmen, gesteuert durch die Steuer- und Auswerteinheit, eine durch den Bildsensor erfolgende Aufnahme eines Bildes von dem in das Objektiv einfallenden Laserstrahl automatisch veranlasst und anschliessend automatisch das Durchführen der Ermittlung und der Quantifizierung gestartet wird. Dabei sind insbesondere auch die Funktionalitäten zur Überprüfung der Laserstrahlazimuttreue beziehungsweise der Laserstrahlneigungstreue als nach Auslösung völlig automatisch ablaufende Funktionalitäten bereitgestellt, und, gesteuert durch die Steuer- und Auswerteinheit, werden eine durch den Bildsensor erfolgende Aufnahme eines Bildes von dem in das Objektiv einfallenden Laserstrahl automatisch veranlasst und anschliessend automatisch das Durchführen der Ermittlung und der Quantifizierung gestartet.

Ein weiterer Gegenstand der Erfindung ist ein System aus einer erfindungsgemässen Laserstrahlhorizontalitätstreue-Überprüfvorrichtung und einem eine Strahl-Selbsthorizontierfunktionalität aufweisenden Laserstrahl-Projektionsgerät für Arbeiten im Bau- und/oder Innenausbau, insbesondere Rotationslaser oder Linien- oder Punktlaser, insbesondere wobei die Laserstrahlhorizontalitätstreue-Überprüfvorrichtung und das Laserstrahl-Projektionsgerät jeweils eine Datenkommunikations-Schnittstelle aufweisen, und wobei die Laserstrahlhorizontalitätstreue-Überprüfvorrichtung zur Generierung von von dem Laserstrahl-Neigungswert abhängigen Daten und zur Kommunikation dieser Daten an das Laserstrahl-Projektionsgerät ausgebildet ist, sodass die Strahl-Horizontierfunktionalität, insbesondere Strahl-Selbsthorizontierfunktionalität, des Laserstrahl-Projektionsgeräts anhand von diesen erhaltenen Daten rekalibrierbar ist, insbesondere wobei das Laserstrahl-Projektionsgerät zur selbsttätigen automatischen Rekalibrierung seiner Strahl-Horizontierfunktionalität, insbesondere Strahl-Selbsthorizontierfunktionalität anhand von diesen erhaltenen Daten ausgebildet ist.

Ein weiterer Gegenstand der Erfindung ist ein Verfahren zur Überprüfung der Laserstrahlhorizontalitätstreue von einem eine Strahl-Selbsthorizontierfunktionalität aufweisenden Laserstrahl-Projektionsgerät, welches für Arbeiten im Bau- und/oder Innenausbau ausgelegt ist, insbesondere Rotationslaser oder Linien- oder Punktlaser, wobei das Verfahren mit einem Teleskop erfolgt, welches aufweist
- einen Abschwächungsfilter,
- ein vergrössernd wirkendes Objektiv und
- einen in einer Bildebene des Objektivs angeordneten flächigen Bildsensor zur Erfassung eines Bildes von einem in das Objektiv einfallenden Laserstrahl,
   und wobei im Rahmen des Verfahrens erfolgen
- ein Kompensieren einer Neigung des Teleskops,
- ein Aufnehmen eines Bildes von einem in das Objektiv einfallenden Laserstrahl,
- ein Ermitteln einer Bildposition des im Bild aufgenommenen Laserstrahls anhand von Bildverarbeitung und
- ein Quantifizieren der Laserstrahlhorizontalitätstreue mit einem Übersetzen der ermittelten Bildposition in einen Laserstrahl-Neigungswert anhand von einer Übersetzungsregel, die mit von einer Position der Kamera bzw. des Bildsensors im Teleskop abhängigen Kalibrierparametern zusammenhängt.

Dabei sind die in Verbindung mit der Vorrichtung genannten Weiterbildungen und speziellen Merkmale der Erfindung analog auch auf das erfindungsgemässe Verfahren übertragbar.

Die erfindungsgemässe Vorrichtung und das erfindungsgemässe Verfahren werden dabei ferner nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1a-b: eine Laserstrahlhorizontalitätstreue-Überprüfvorrichtung und zwei bekannte Ausführungsformen von Laserstrahl-Projektionsgeräten nach dem Stand der Technik,
- Fig.2: eine schematische Übersichtsdarstellung einer erfindungsgemässen Laserstrahlhorizontalitätstreue-Überprüfvorrichtung im Einsatz bei der Überprüfung der Laserstrahlhorizontalitätstreue eines Laserstrahl-Projektionsgeräts;
- Fig.3: eine Ausführungsform einer erfindungsgemässen Laserstrahlhorizontalitätstreue-Überprüfvorrichtung,
- Fig.4: eine weitere Ausführungsform einer erfindungsgemässen Laserstrahlhorizontalitätstreue-Überprüfvorrichtung,
- Fig.5: eine Darstellungsform von Bilddaten des Laserstrahls,
- Fig.6: ein Beispiel für die Verarbeitung von Bilddaten des Laserstrahls,
- Fig.7: ein Beispiel für den Nachweis von Horiziontalitätsabweichungen eines rotierenden Laserstrahls oder rotierenden Laserstrahl-Fächers,
- Fig.8: ein weiteres Beispiel für den Nachweis von Horizontalitätsabweichungen eines rotierenden Laserstrahls oder rotierenden Laserstrahl-Fächers,
- Fig.9: ein Beispiel für den Nachweis von Vertikalitätsabweichungen einer Ebene, die durch einem Rotationslaser in Lay-Down-Stellung oder einen vertikalen Laserstrahl-Fächer erzeugt wird,
- Fig.10a-b: je ein Beispiel für die Vermessung der Horizontalitätstreue eines Laserstrahl-Projektionsgeräts,
- Fig.11: ein Beispiel für anhand der in Fig. 9a dargestellten Anordnung erzeugte Nachweise von Horiziontalitätsabweichungen,
- Fig.12a-b: ein Beispiel für quantitative Messergebnisse für eine erfindungsgemässe Vermessung eines rotierenden Lasers und
- Fig.13a-b: je ein Beispiel realer quantitativer Messergebnisse für eine erfindungsgemässe Vermessung eines rotierenden Lasers.

Fig. 1a zeigt eine Laserstrahlhorizontalitätstreue-Überprüfvorrichtung 10' nach dem Stand der Technik. Die Vorrichtung 10' umfasst ein Teleskop 1' mit einem Objektiv 3, welches eine Bildebene 4 aufweist, in der in der Ferne, d.h. in unendlichem Abstand befindliche Objekte, abgebildet werden. In Fortsetzungsrichtung der optischen Achse A des Objektivs 3 ist der Bildebene 4 nachfolgend für einen Betrachter ein Okular 14 angeordnet, hinter dem für eine Überprüfung der Laserstrahlhorizontalitätstreue eines Laserstrahl-Projektionsgeräts, insbesondere eines Rotationslasers oder Linien- oder Punktlasers, ein flächiger Bildsensor 5', typischerweise eine Kamera, angeordnet ist, auf den ein eintreffender Laserstrahl abgebildet wird. Üblicherweise ist der Bildsensor 5' mit seinem Zentrum auf der optischen Achse A angeordnet. Vor dem Objektiv 3 ist eine Blende 15 mit einer sehr kleinen, zentralen lichtdurchlässigen Öffnung 16 auf der optischen Achse A des Objektivs 3 angebracht, beispielsweise auf das Teleskop 1' aufgeschraubt. Üblicherweise umfasst eine Laserstrahlhorizontalitätstreue-Überprüfvorrichtung nach dem Stand der Technik ausserdem einen Eigenneigungskompensator (hier nicht dargestellt), mit dem sichergestellt werden soll, dass die optische Achse A selbst bei leicht geneigter Aufstellung des Teleskops immer horizontal ausgerichtet ist.

Eine derartige Überprüfvorrichtung, wie sie handelsüblich erhältlich ist, ist mit einer Reihe von Nachteilen verbunden. Einerseits ist die damit erreichbare Genauigkeit bei der Überprüfung der Laserstrahlhorizontalitätstreue eines Laserstrahl-Projektionsgeräts sehr beschränkt, wie nachfolgend genauer begründet wird. Andererseits ist auch die Durchführung einer solchen Überprüfung aufwendig. Eine erste Gruppe von Nachteilen beruht auf der Abbildung des Laserstrahls über ein Okular. Ein Okular weist üblicherweise einen nur kleinen Durchmesser und eine kurze Brennweite, also eine starke Wölbung der Linsenoberfläche auf. Dadurch werden zwangsläufig erhebliche optische Verzerrungen über die Ausdehnung des Sichtfeldes erzeugt, wobei die Störung im Zentrum des Okulars am geringsten ist. Ausserdem ist typischerweise ein Okular in axialer Richtung über eine gewisse Distanz verschiebbar angeordnet, um eine Anpassung an die spezifischen Eigenschaften eines Betrachterauges zu ermöglichen. Dadurch ist zwangsläufig nur eine ungefähre, aber kaum eine hochgenaue Positionierung des Okulars bzw. Positionshaltungstreue im Gebrauch des Okulars, möglich. Besonders nachteilig für ein Messresultat ist die Anfälligkeit des Teleskops hinsichtlich einer unbeabsichtigten Verkippung des Okulars bezüglich der optischen Achse A im Gebrauch des Teleskops. Dadurch wird ein Versatz eines eintreffenden Laserstrahls, der horizontal durch das Objektiv in das Teleskop eintritt und eigentlich auf den Schnittpunkt der optischen Achse A mit dem flächigen Bildsensor 5' abgebildet werden sollte, auf dem Bildsensor 5' erzeugt, was dann fälschlicherweise eine tatsächlich gar nicht vorhandene Abweichung des Laserstrahls vom horizontalen Verlauf indiziert. Axiale Bewegungen bzw. Fehlpositionierungen des Okulars beeinträchtigen zusätzlich die Kollimation des Laserstrahls auf dem Bildsensor. Zusätzlich ist diese Vorrichtung erheblich anfällig gegen Vibrationen, und zwar umso stärker, je weiter entfernt von der Bildebene 4 der Bildsensor 5' angeordnet ist. Diese Vorrichtung erlaubt nur prinzipielle und nicht graduelle Überprüfungen. Es kann also nur festgestellt werden, ob eine Abweichung vom horizontalen Verlauf des Laserstrahls vorliegt oder nicht. Jede Art von Quantifizierung einer solchen Abweichung vom horizontalen Einfall eines Laserstrahls und gar eine genauere Analyse zur Bestimmung der Ursache für eine solche Abweichung ist mit dieser Vorrichtung nicht möglich.

Neben dieser Vielzahl von Nachteilen hinsichtlich der erreichbaren optischen Messgenauigkeit ist diese Vorrichtung zur Überprüfung der Laserstrahlhorizontalitätstreue eines Laserstrahl-Projektionsgeräts für einen Bediener auch nur unter grossem Aufwand benutzbar. Die vor dem optischen Eingang des Teleskops 1' angebrachte Blende 15 mit ihrer technisch bedingt sehr klein dimensionierten, zentralen Öffnung 16 ist für diese Vorrichtung zwingend notwendig, um eine Unterscheidung eines in seiner Ausbreitungsrichtung von der vorgesehenen Horizontalität abweichenden Laserstrahls von einem tatsächlich horizontalen, aber zur optischen Achse A in der Höhe (also parallel senkrecht) versetzt verlaufenden Laserstrahls zu ermöglichen. Letzteres würde bei dieser Vorrichtung ebenfalls zu einem Versatz des Auftreffpunkts des Laserstrahls auf dem Bildsensor 5' führen. Somit ist es bei dieser Vorrichtung aus dem Stand der Technik geboten, diese Öffnung 16 möglichst klein zu bemessen, um einen Höhenversatz von einfallendem Laserstrahl und optischer Achse A ausschliessen zu können und damit überhaupt eine eindeutige Messbarkeit von einem in seiner Ausbreitungsrichtung von der vorgesehenen Horizontalität abweichenden Laserstrahl zu ermöglichen. Für den Einsatz des Geräts bedeutet dieses aber, dass ein hinsichtlich seiner Laserstrahlhorizontalitätstreue zu überprüfender Laser mit seiner optischen Austrittsöffnung für den Laserstrahl sehr genau auf die Blendenöffnung 16 ausgerichtet, d.h. bei erwünschtem horizontalem Laserstrahlverlauf auf der Höhe der optischen Achse A positioniert werden muss. Dieses bedeutet hohe Anforderungen an einen Benutzer und hohen Zeitaufwand für eine genaue Positionierung des zu überprüfenden Laserstrahl-Projektionsgeräts relativ zum Teleskop.

Fig. 1b zeigt zwei bekannte Ausführungsformen von Laserstrahl-Projektionsgeräten 20, jeweils versehen mit einer Laserstrahl-Austrittsöffnung 25, zur Aussendung eines horizontalen, kollimierten Laserstrahls L als Punkt 27 auf einer Projektionsfläche, oder eines horizontalen Laserstrahl-Fächers zur Erzeugung einer horizontalen Linie auf einer Projektionsfläche. Weitere Ausführungsformen von für eine Vermessung mit der erfindungsgemässen Laserstrahlhorizontalitätstreue-Überprüfvorrichtung vermessbare Laserstrahl-Projektionsgeräte, wie insbesondere auch Rotationslaser, sind ebenfalls bekannt und im Stand der Technik hinreichend beschrieben. Derartige Laserstrahl-Projektionsgeräte weisen in bekannter Weise jeweils Mechanismen zur Bereitstellung einer Selbsthorizontierungsfunktionalität auf, die dafür sorgen, dass trotz leicht geneigter Aufstellung des Geräts (z.B. etwa im Bereich von +-5° Neigung um die Horizontale) dennoch der Laserstrahl in horizontaler Richtung ausgesendet wird. Zudem gehören auch Kanalbaulaser als Punktlaser zu solchen Laserstrahl-Projektionsgeräten mit Selbsthorizontierungsfunktionalität. Die die Erfindung betreffende Vorrichtung ist nun genau dafür ausgelegt und geschaffen, um bei solchen Laserstrahl-Projektionsgeräte zu überprüfen, wie treu der Mechanismus zur Selbsthorizontierung tatsächlich ist bzw. welche Richtungsabweichungen des emittierten Laserstrahls von der wahren Horizontalen tatsächlich vorhanden sind.

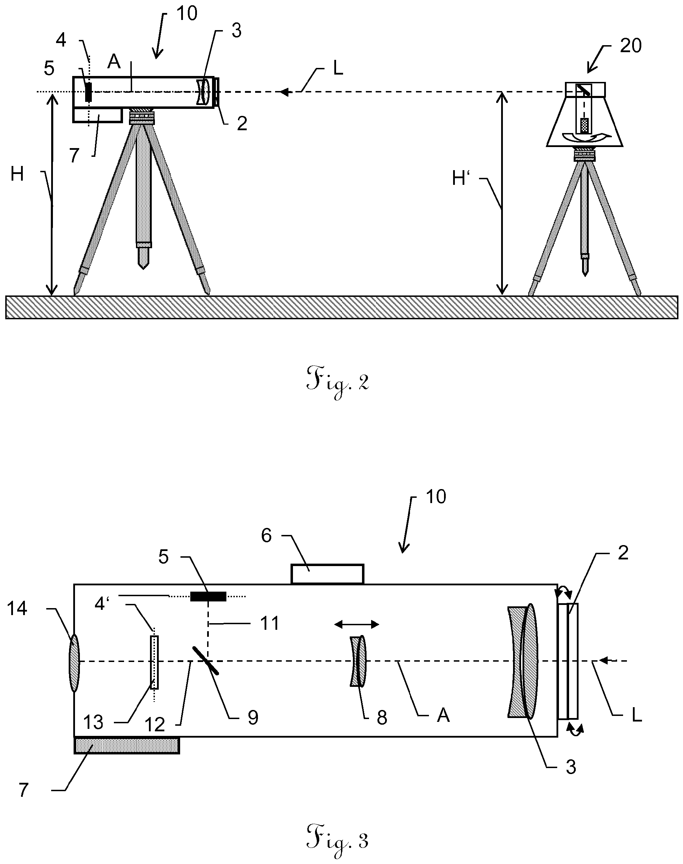

Fig. 2 zeigt eine schematische Übersichtsdarstellung einer erfindungsgemässen Laserstrahlhorizontalitätstreue-Überprüfvorrichtung 10 im Einsatz bei der Überprüfung der Laserstrahlhorizontalitätstreue eines Laserstrahl-Projektionsgeräts 20. Der Laserstrahl L tritt in einer Höhe H' über dem Untergrund aus dem Laserstrahl-Projektionsgerät 20 aus. Die optische Achse A der Überprüfvorrichtung 10 befindet sich in einer Höhe H über dem Untergrund.

In diesem schematisch dargestellten Beispiel fallen die optische Achse A und der Verlauf des Laserstrahls L zusammen. Dieses muss aber nicht für eine erfindungsgemässe Laserstrahlhorizontalitätstreue-Überprüfvorrichtung der Fall sein, und insbesondere müssen die Höhen H und H' nicht gleich gross sein (wie weiter unten nochmals näher erläutert).

Im dargestellten Beispiel sind sowohl die erfindungsgemässe Laserstrahlhorizontalitätstreue-Überprüfvorrichtung 10 als auch das Laserstrahl-Projektionsgerät 20, ausgebildet als ein Rotationslaser, jeweils auf einem dreibeinigen Stativ montiert. Als wesentliche Komponenten der Überprüfvorrichtung 10 sind dargestellt: ein Abschwächungsfilter 2 am optischen Eingang des Teleskops 1, vor dem Objektiv 3, welches eine optische Achse A definiert, ein flächiger Bildsensor 5, der in einer Bildebene 4 angeordnet ist, ein (erst anhand der nachfolgenden Figuren näher beschriebenen) Eigenneigungskompensator und eine der Überprüfvorrichtung 10 zugeordnete Auswerteeinheit 7. Dabei muss die Auswerteeinheit nicht, wie hier und auch in den nachfolgenden Beispielen dargestellt, direkt in physischem Kontakt mit dem Teleskop 1 verbunden sein. Der Bildsensor 5 kann beispielsweise als ein CMOS-Chip oder CCD-Chip oder PSD-Chip (wie eine Kamera) ausgebildet sein und ist vorzugsweise nicht nur im sichtbaren, sondern auch im infraroten Spektralbereich lichtempfindlich, so dass auch eine Vermessung infrarot emittierender Laser ermöglicht wird.

Im Vergleich zum vorangehend anhand von Fig. 1 illustrierten Stand der Technik ist der Bildsensor 5 hier erfindungsgemäss in der Bildebene 4 angeordnet und der Fokus derart eingestellt bzw. einstellbar (bzw. der Bildsensor 5 relativ zum Objektiv 3 abhängig von dessen Brennweite derart positioniert), dass parallel zueinander verlaufende und in das Objektiv einfallende Strahlen über die gesamte Apertur des Objektivs jeweils in einem selben Punkt auf der Bildebene zusammenfallen und abgebildet werden und somit durch den Bildsensor in einem einzigen, selben Bildpunkt (der also dann genau für eine Einfallsrichtung steht) erfasst.

Dadurch wird bewirkt, dass jeder treu horizontal eintreffende Laserstrahl L auf demselben Punkt (bzw. unter Berücksichtigung von Azimutrichtungsschwankungen zumindest auf einer selben Linie) auf den Bildsensor 5 abgebildet wird, auch wenn er mit senkrechtem Versatz zur optischen Achse A eintrifft. Daher ist das Teleskop 1 mit seinem Objektiv 3 blendenfrei ausgebildet, so dass der gesamte oder zumindest ein grosser Bereich der Querschnittsfläche des Objektivs 3 als Apertur nutzbar ist.

Damit ist es lediglich noch erforderlich, den Laserstrahl L auf die Apertur des Objektivs 3 auszurichten, nicht aber auf eine erheblich kleinere Öffnung einer vorgeschraubten Blende, was den erforderlichen Aufwand für die Positionierung eines zu überprüfenden Laserstrahl-Projektionsgeräts 20 erheblich reduziert.

Der Laserstrahl L wird direkt über das Objektiv 3 in der Bildebene 4 auf den Bildsensor 5 abgebildet, ohne dazwischen befindliche Zwischenbildebene und Okular. Dadurch entfallen zudem auch alle Probleme, die mit einer für eine zufriedenstellende Messgenauigkeit erforderlichen genauen Positionierung und Positionshaltigkeit eines Okulars verbunden sind, ebenso eine Störungsanfälligkeit gegenüber Vibrationen.

Fig. 3 zeigt eine mögliche Ausführungsform einer erfindungsgemässen Laserstrahlhorizontalitätstreue-Überprüfvorrichtung 10, wie sie in Fig. 2 mit wesentlichen Grundbestandteilen dargestellt wurde, für ein Laserstrahl-Projektionsgerät für Arbeiten im Bau- und/oder Innenausbau, wobei das Laserstrahl-Projektionsgerät mit einer Strahl-Selbsthorizontierfunktionalität ausgestattet ist. Die Laserstrahlhorizontalitätstreue-Überprüfvorrichtung 10 weist wiederum ein Teleskop 1 mit einem Abschwächungsfilter 2, einem vergrössernd wirkenden Objektiv 3 und einem flächigen Bildsensor 5 zur Aufnahme eines Bildes von einem in das Objektiv 3 einfallenden Laserstrahl L auf. Bestandteile der Laserstrahlhorizontalitätstreue-Überprüfvorrichtung 10 sind ausserdem ein Eigenneigungskompensator 6 und eine Auswerteeinheit 7, die ausgebildet ist zur automatischen Durchführung von einer Ermittlung einer Bildposition des im Bild aufgenommenen Laserstrahls L anhand von Bildverarbeitung. Erfindungsgemäss ist der flächige Bildsensor 5 wiederum in einer Bildebene 4 des Objektivs 3 angeordnet, und die Auswerteeinheit 7 ist erfindungsgemäss zusätzlich ausgebildet zur Quantifizierung der Laserstrahlhorizontalitätstreue mit einer Übersetzung der ermittelten Bildposition in einen Laserstrahl-Neigungswert anhand von einer Übersetzungsregel, die mit Kalibrierparametern zusammenhängt, welche von einer Position des Bildsensors 5 im Teleskop 1 abhängig sind.

Durch die letztgenannten zusätzlichen Merkmale der Auswerteeinheit 7 wird vorteilhaft, im Gegensatz zum Stand der Technik, ermöglicht, das Ausmass einer Abweichung eines Laserstrahls von der Horizontalitätstreue zu quantifizieren und sogar auch noch, insbesondere basierend auf der quantitativen Art der bestimmten Abweichungsdaten, daraus Hinweise für eine Diagnose und Identifizierung der Ursache solcher Abweichungen zu gewinnen. Dieses wird nachfolgend in einem weiteren, experimentell durchgeführten Beispiel, auch noch demonstriert werden.

Gemäss der in Fig. 3 gezeigten Ausführungsform der erfindungsgemässen Laserstrahlhorizontalitätstreue-Überprüfvorrichtung 10 ist der Abschwächungsfilter 2 derart ausgebildet, dass eine Vielzahl von unterschiedlichen Abschwächungsgrade bereitgestellt ist, aus welchen benutzerseitig jeweils ein Abschwächungsgrad wählbar und einstellbar ist oder durch Auswertung von einem Test-Bild, das von dem in das Objektiv 3 einfallenden Laserstrahl L aufgenommenen wird, ein Abschwächungsgrad automatisch ausgewählt und einzustellen veranlasst wird. Bevorzugt ist der Abschwächungsfilter 2 derart ausgebildet, dass in einem breiten Abschwächungsgrad-Bereich stufenlos jeweils ein Abschwächungsgrad wählbar und einstellbar ist. Insbesondere kann dabei der Abschwächungsfilter 2 mindestens einen drehbar angeordneten linearen Polarisator aufweisen, im Speziellen zwei oder mehrere relativ zueinander drehbar angeordnete lineare Polarisatoren (angedeutet durch einen Doppelpfeil in Fig. 3). Im Falle, dass die zu detektierende Laserstrahlung bereits linear polarisiert vorliegt, ist bereits ein linearer Polarisator ausreichend, um den breitest möglichen Abschwächungsgradbereich, d.h. zwischen 0 % (parallele Polarisation) und 100 % (gekreuzte Polarisation) einzustellen. Des Weiteren wird bevorzugt, dass sich der Abschwächungsfilter 2 im Wesentlichen gleichmässig über die gesamte Objektivquerschnittsfläche als Apertur erstreckt.

Zusätzlich zu der Anordnung gemäss Fig. 2 ist, gemäss der in Fig. 3 dargestellten Ausführungsform, im Teleskop 1 ein im Strahlengang dem Objektiv 3 nachgeordnetes Fokussierglied 8 vorgesehen, das axial verstellbar ist und für welches in den Kalibrierparametern eine spezifische definierte Fokusposition hinterlegt sein kann, für welche gilt, dass zueinander parallel verlaufende und in das Objektiv einfallende Strahlen - unabhängig von einer Apertur-Eintreffstelle über die gesamte Apertur des Objektivs - jeweils in einem selben einzigen Punkt auf der Bildebene zusammenfallen und abgebildet werden und somit durch den Bildsensor in einem einzigen, selben Bildpunkt erfasst werden.

Ausserdem weist gemäss dieser Ausführungsform das Teleskop 1 einen im Strahlengang angeordneten Strahlteiler 9 zur Aufteilung des Strahlengangs in einen ersten Kanal 11 und einen zweiten Kanal 12 auf derart, dass im ersten Kanal 11 eine erste Bildebene 4 des Objektivs 3 und im zweiten Kanal 12 eine zweite Bildebene 4' des Objektivs 3 erzeugt wird. Dabei ist in der ersten Bildebene 4 der Bildsensor 5 angeordnet, und in der zweiten Bildebene 4' sind eine einen Indikator für die optische Achse A tragende Optik 13, insbesondere mit Fadenkreuz, und ein dieser Optik 13 nachgeordnetes Okular 14 zur mit dem Auge eines Benutzers erfolgenden Betrachtung des in der zweiten Bildebene 4' erzeugten Zwischenbilds angeordnet.

Als Eigenneigungskompensator kann dabei beispielsweise ein elektronischer Neigungsberücksichtiger mit einem hochpräzisen Neigungssensor 6 verwendet werden zur Bestimmung eines von einer aktuellen Neigungsstellung des Teleskops 1 abhängigen Teleskop-Neigungswertes. Der Teleskop-Neigungswert wird dann durch die Auswerteeinheit 7 automatisch berücksichtigt bei einer automatisch durchgeführten Übersetzung der Bildposition in einen Laserstrahl-Neigungswert.

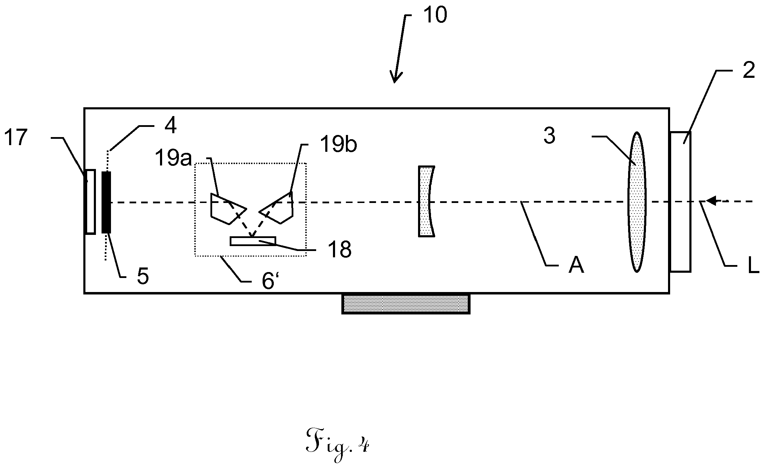

Fig. 4 zeigt eine weitere Ausführungsform einer erfindungsgemässen Laserstrahlhorizontalitätstreue-Überprüfvorrichtung 10, bei der der Eigenneigungskompensator - wie im Stand der Technik an sich bekannt - ausgebildet ist als ein opto-mechanischer Selbsthorizontierer 6' mit einem im Strahlengang des Teleskops 1 zwischen dem Objektiv 3 und dem Bildsensor 5 angeordneten opto-mechanischen Element zur Selbsthorizontierung der optischen Achse A des Teleskops 1. Der Bildsensor 5 ist wiederum in der Bildebene 4 angeordnet. Gemäss dieser Ausführungsform beruht die Horizontierung der Laserstrahlhorizontalitätstreue-Überprüfvorrichtung 10 auf einer Ausrichtung des Strahlengangs im Teleskop 1 mittels reflektierender Komponenten 18, 19a, 19b, beispielsweise ausgebildet als Spiegel oder Prismen, die Bestandteil des Selbsthorizontierers 6' sind. Im Speziellen sind zwei entlang der optischen Achse A aufeinander folgende Komponenten 19a, 19b im Wesentlichen entlang der optischen Achse fix angeordnet und die reflektierende Komponente 18 ist drehbar bezüglich der Richtung der optischen Achse A angeordnet, um eine auf optischen Signalen beruhende Selbsthorizontierung der Laserstrahlhorizontalitätstreue-Überprüfvorrichtung 10 zu ermöglichen. Optional wird das Bild des Laserstrahls L auf einem Mikro-Display 17, das gegebenenfalls durch ein hier nicht dargestelltes Okular betrachtbar ist, oder einem (z.B. entweder direkt am Teleskop angeordneten oder auf einer separaten Steuer- und Auswerteeinheit mit Benutzerinterface angeordneten) Touchscreen angezeigt.

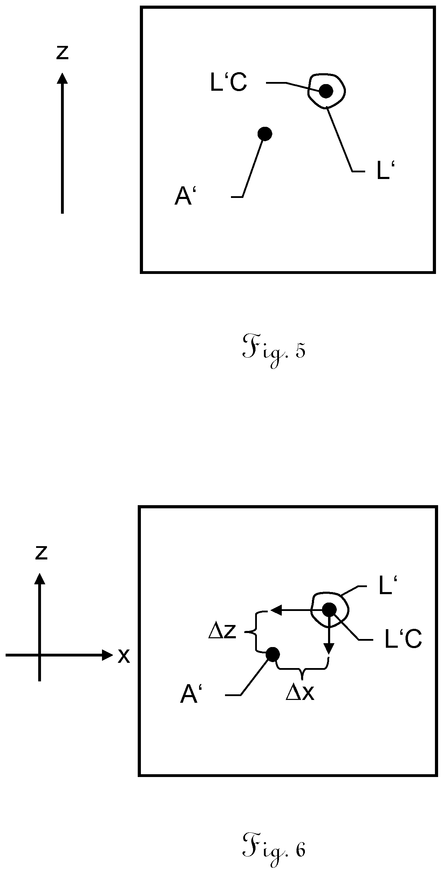

Die Figuren 5 und 6 zeigen mögliche Darstellungsformen des aufgenommenen Bilds des Laserstrahls L. In Fig. 5 sind ein Abbild L' des Laserstrahls L, mit einer dazu ermittelten (zentralen) Bildposition L'C und eine fiktive Abbildung A' als eine kalibrierte Abbildungsposition der optischen Achse A des Objektivs 3 zu sehen. Zudem ist eine Richtung Z dargestellt, welche beispielhaft jene kalibrierte Richtung im Bild angibt, die für eine - hypothetisch durch einen reinen Horizontalitätsfehler bewirkte - Versatzrichtung einer Laserstrahl-Auftreffposition auf dem Bildsensor steht.

Anhand dieses aufgenommenen Bildes (also anhand der Bilddaten) kann nun durch Bildverarbeitung das Abbild L' des Laserstrahls L ausgewertet werden hinsichtlich einer punktförmigen mittleren Bildposition des Spots L'; z.B. durch Schwerpunktbildung oder durch folgende Methode:
□ Bringen eines ausgewählten und mit der Form des Spots L' korrespondierenden Musters anhand einer Best-Fit-Methode im Bild in bildpositionelle Übereinstimmung mit dem Spot L', insbesondere mit Subbildpunktgenauigkeit, und
□ Bestimmen der Bildposition L'C anhand der in Übereinstimmung gebrachten Lage des Musters im Bild, ebenso insbesondere mit Subbildpunktgenauigkeit.

Dabei kann bei dieser Methode insbesondere für jedes gespeicherte Muster eine Information mitgespeichert sein, die eine musterintern definierte, für die letztendliche Ermittlung der Bildposition L'C heranzuziehende Muster-Position innerhalb des Musters ableiten lässt, im Speziellen wobei die Information die musterintern definierte Muster-Position selbst ist oder ein definierter Muster-Positions-Bestimmungsalgorithmus wie etwa ein Musterschwerpunkt-Bestimmungsalgorithmus.

Diese ermittelte Bildposition L'C kann nun - unter Heranziehung der in den Kalibrierparametern hinterlegten Informationen über die Abbildungsposition der optischen Achse A des Objektivs 3 und über die Richtung Z - ausgewertet werden hinsichtlich einer Einfallsrichtung des Laserstrahls, insbesondere hinsichtlich eines reinen Neigungswerts des Laserstrahls.

Dafür wird der im Bild vorhandene (Pixel-)Abstand von der Bildposition L'C zur Abbildungsposition der optischen Achse A bestimmt und dieser Abstand fiktiv auf die kalibrierte Richtung Z projiziert (vgl. Skalarprodukt aus der Mathematik). Die auf diese Richtung Z projizierte Komponente ΔZ des bestimmten Abstands steht dann direkt für eine Richtungsabweichung des einfallenden Laserstrahls von der Horizontalen, sodass diese Komponente in einen Neigungswert für den Laserstrahl übersetzt werden kann.

Zusammengefasst wird somit für die Übersetzung der Bildposition L'C also ein im Bild zwischen der Bildposition L'C und der Abbildungsposition A' in jener Richtung Z vorhandener Abstand ΔZ bestimmt, die als Richtung angenommen wird oder in den Kalibrierparametern abgelegt ist, die für eine - hypothetisch durch einen reinen Horizontalitätsfehler bewirkte - Versatzrichtung einer Laserstrahl-Auftreffposition auf dem Bildsensor steht. Dieser Abstand wird dann schliesslich - insbesondere entsprechend eines durch das Objektiv-Abbildungsverhältnis definierten Übersetzungs-Faktors - in den Laserstrahl-Neigungswert übersetzt.

Alternativ zu dem Fall, dass in den Kalibrierparametern Informationen über die Abbildungsposition A' der optischen Achse A des Objektivs 3 und über die Richtung Z hinterlegten sind, kann beispielsweise auch eine - insbesondere im Bild über den gesamten Bildbereich im Wesentlichen horizontal verlaufende - Null-Neigungslinie im Bild hinterlegt sein. Diese Null-Neigungslinie gibt an, in welchen (Pixel-)Positionen auf dem Bildsensor jeweils mit leicht variierender azimutaler Richtung, jedoch jeweils streng horizontal einfallende Strahlen abgebildet werden.

Diese kalibrierte Linie ist dabei, wie eingangs erklärt aufgrund der Anordnung des Bildsensors in der Bildebene, erfindungsgemäss sogar unabhängig von jeweiligen Eintrittsstellen in die Apertur des Objektivs.

Unter Heranziehung von solchen Kalibrierparametern kann für die Übersetzung der Bildposition L'C nun ein im Bild zwischen der Bildposition L'C und der kalibrierten Null-Neigungslinie vorhandener Abstand bestimmt werden. Dieser Abstand wird dann direkt - insbesondere wiederum entsprechend eines durch das Objektiv-Abbildungsverhältnis definierten Übersetzungs-Faktors - in den Laserstrahl-Neigungswert übersetzt.

Als weitere Alternative kann als Kalibrierparameter auch direkt eine vorprozessierte Look-Up-Tabelle hinterlegt sein, aus welcher für jeweilige Bildpositionen direkt ein zugeordneter Laserstrahl-Neigungswert abgelegt ist.

Unter Heranziehung von solchen Kalibrierparametern kann dann für die Übersetzung der Bildposition L'C nun der in der Look-Up-Tabelle der ermittelten Bildposition L'C zugeordnete Laserstrahl-Neigungswert direkt ausgelesen werden.

Für alle Fälle kann dabei der Laserstrahl-Neigungswert beispielsweise als Neigungswinkel des Laserstrahls (z.B. in Grad/Minuten/Sekunden oder Prozent Steigung) ausgegeben werden.

Fig. 6 illustriert eine mögliche weitere Verarbeitung der Bilddaten gemäss Fig. 5, wobei die Bildposition L'C zusätzlich hinsichtlich einer azimutalen Einfallsrichtung ausgewertet werden kann.

Diese Auswertemöglichkeit kann insbesondere relevant sein für eine zusätzliche Überprüfung von einer Azimutalrichtungstreue eines emittierten Laserstrahls, beispielsweise von einer Totalstation oder einem Lasertracker als als Punktlaser ausgebildetes Laserstrahl-Projektionsgerät.

Ein mögliches Vorgehen kann dabei sein, dass in einer ersten Lage (Face 1) der Strahllenkeinheit von Totalstation/Lasertracker ein erster Azimutalrichtungswert für den Laserstrahl ermittelt wird, die Strahllenkeinheit von Totalstation/Lasertracker dann umgeschlagen wird in die zweite Lage (Face 2), wobei also die Strahllenkeinheit - in dem Fachmann an sich bekannter Weise - in den beiden DrehAchsen jeweils um exakt 180° umgeschwenkt wird, und in dieser zweiten Lage (Face 2) der Strahllenkeinheit von Totalstation/Lasertracker erneut anhand der erfindungsgemässen Überprüfvorrichtung ein zweiter Azimutalrichtungswert für den Laserstrahl ermittelt wird.

Ein Unterschied zwischen erstem und zweitem bestimmten Azimutalrichtungswert kann dann herangezogen werden zur Feststellung und Quantifizierung eines azimutalen Richtungsfehlers und somit der Azimutalrichtungstreue des Laserstrahls der Totalstation bzw. des Lasertrackers.

Auch für diese Funktionalität zur Überprüfung einer Laserstrahlazimuttreue werden dabei eine durch den Bildsensor erfolgende Aufnahme eines Bildes von dem in das Objektiv einfallenden Laserstrahl ausgelöst und durch die Auswerteeinheit automatisch durchgeführt
- eine Ermittlung einer Bildposition L'C des im Bild vorhandenen Spots L' des erfassten Laserstrahls (wobei dies genau analog zu den in Zusammenhang mit Figur 5 vorgenannten Beschreibungen erfolgen kann) und
- eine Quantifizierung der Laserstrahlazimuttreue mit einer Übersetzung der ermittelten Bildposition L'C in einen Laserstrahl-Azimutalrichtungswert anhand von einer von den gespeicherten Kalibrierparametern abhängigen Übersetzungsregel.

Dafür können als Kalibrierparameter (zusätzlich zu den in Verbindung mit Fig. 5 erwähnten Informationen) folgende Informationen hinterlegt sein:
□ eine Abbildungsposition A' der optischen Achse im Bild sowie insbesondere eine Richtung X im Bild, die für eine - hypothetisch durch eine reine azimutale Richtungsabweichung von der optischen Achse bewirkte - Versatzrichtung einer Laserstrahl-Auftreffposition auf dem Bildsensor steht (diese Option ins dabei in Figur 6 gezeigt),
□ eine - insbesondere im Bild über den gesamten Bildbereich im Wesentlichen vertikal verlaufende - Null-Azimutalabweichungslinie im Bild (wobei Linie angibt, in welchen (Pixel-)Positionen auf dem Bildsensor jeweils mit leicht variierender elevativer Richtung, jedoch jeweils streng exakt in azimutaler Richtung der optischen Achse einfallende Strahlen abgebildet werden), und/oder
□ eine Look-Up-Tabelle, aus welcher für jeweilige Bildpositionen direkt ein zugeordneter Laserstrahl-Azimutalrichtungswert abgelegt ist.

Abhängig davon, welche Parameter jeweils hinterlegt sind, können jeweils dann für die Übersetzung der ermittelten Bildposition L'C in einen Laserstrahl-Azimutalrichtungswert
□ ein im Bild zwischen der Bildposition L'C und der Abbildungsposition A' der optischen Achse in jener Richtung vorhandener Abstand ΔX bestimmt werden, die als Richtung angenommen wird oder in den Kalibrierparametern abgelegt ist, die für eine - hypothetisch durch eine reine azimutale Richtungsabweichung von der optischen Achse bewirkte - Versatzrichtung einer Laserstrahl-Auftreffposition auf dem Bildsensor steht, und dieser Abstand ΔX - insbesondere entsprechend eines durch das Objektiv-Abbildungsverhältnis definierten Übersetzungs-Faktors - in den Laserstrahl-Azimutalrichtungswert übersetzt werden (diese Option ins dabei in Figur 6 gezeigt), beziehungsweise
□ ein im Bild zwischen der Bildposition und der Null-Azimutalabweichungslinie vorhandener Abstand bestimmt werden, und dieser Abstand - insbesondere entsprechend eines durch das Objektiv-Abbildungsverhältnis definierten Übersetzungs-Faktors - in den Laserstrahl-Azimutalrichtungswert übersetzt werden, beziehungsweise
□ der in der Look-Up-Tabelle der ermittelten Bildposition der zugeordnete Laserstrahl-Azimutalrichtungswert ausgelesen werden.

Für alle Fälle kann dabei der Laserstrahl-Azimutalrichtungswert (also als Wert für eine relative Azimutalrichtung, d.h. eine Azimutalrichtung des einfallenden Laserstrahls relativ zur Richtung der optischen Achse) beispielsweise als relativer Azimut-Winkel des Laserstrahls (z.B. in Grad/Minuten/Sekunden) ausgegeben werden.

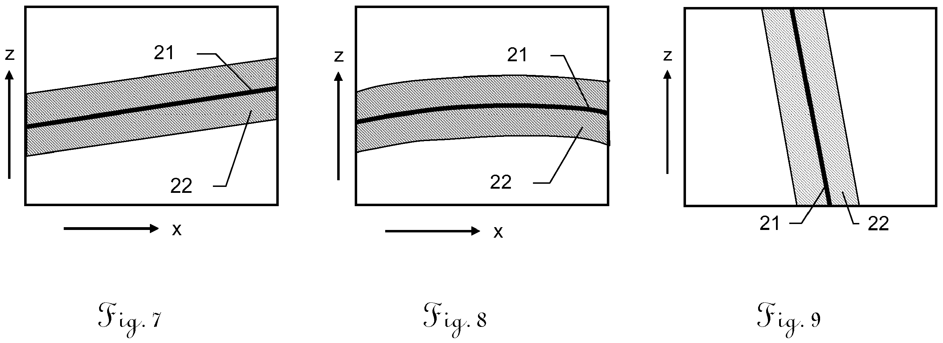

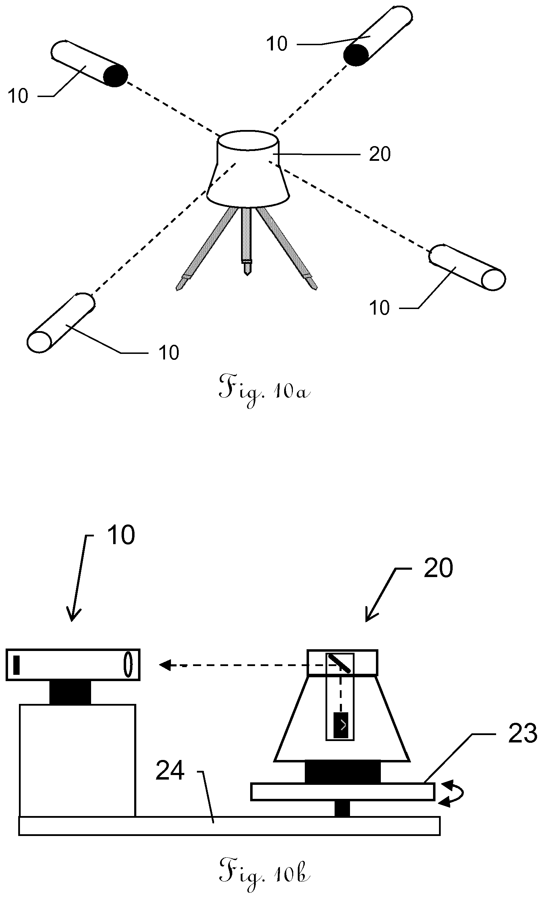

Die Figuren 7 und 8 zeigen Beispiele für den Nachweis von Abweichungen des Emissionsverlaufs eines rotierenden Laserstrahls oder eines Laserstrahl-Fächers von der Horizontalität. Dabei sind mit der Bezugszahl 22 das gemessene Abbild der vom rotierenden Laser erzeugten Referenzebene und mit 21 dazu ermittelter Verlauf und Position der Referenzebenen-Linie, über einen gewissen Azimutalwinkelbereich X, gekennzeichnet. Der Verlauf gemäss Fig. 7 indiziert das Vorliegen einer Abweichung der Referenzebene von der Horizontalität entsprechend einer Schrägstellung bzw. Neigung gegenüber einer horizontalen Ebene. Dieses kann einem zu korrigierenden Fehler in der Justierung des Lasers entsprechen, kann aber auch einer bewusst schräg aufgespannten Referenzebene entsprechen. In diesem Fall kann die erfindungsgemässe Laserstrahlhorizontalitätstreue-Überprüfvorrichtung - durch Auswerten der durch den rotierenden Laserstrahl auf dem Bildsensor erzeugten Projektionslinie - z.B. zur Überprüfung der Ebenentreue der schräggestellten Referenzebene und gegebenenfalls deren Nachjustierung auf einen gewünschten Sollwert eingesetzt werden (wobei hierzu - wie in Zusammenhang mit den Figuren 9a, 9b und 10 näher erläutert - vorteilhaft an mehreren Stellen der Laser-Ebene eine BildAufnahme erfolgen kann).

Der Verlauf gemäss Fig. 8 kann das Vorliegen z.B. eines sogenannten Sattelfehlers indizieren, d.h., dass der Laserstrahl nicht präzise in einer Ebene rotiert, sondern sich die Neigung des Laserstrahls bei einer bestimmten Rotationsposition ändert und dann wieder zu einem Ausgangswert zurückkehrt. Damit können ebenfalls Fehljustierungen des Laserstrahls, mit eventuell sogar möglichen Rückschlüssen auf zugrunde liegende Fehlerursachen, diagnostiziert werden. Der Verlauf gemäss Fig. 8 entspricht einer in der Praxis eher unwahrscheinlichen Situation, dass das Laserstrahl-Projektionsgerät und das Teleskop genau so zueinander ausgerichtet sind, dass die Rotationsposition, welche dem Sattelscheitel entspricht, etwa in der Mitte des vom Bildsensor erfassten Azimutalwinkelbereichs auftritt.

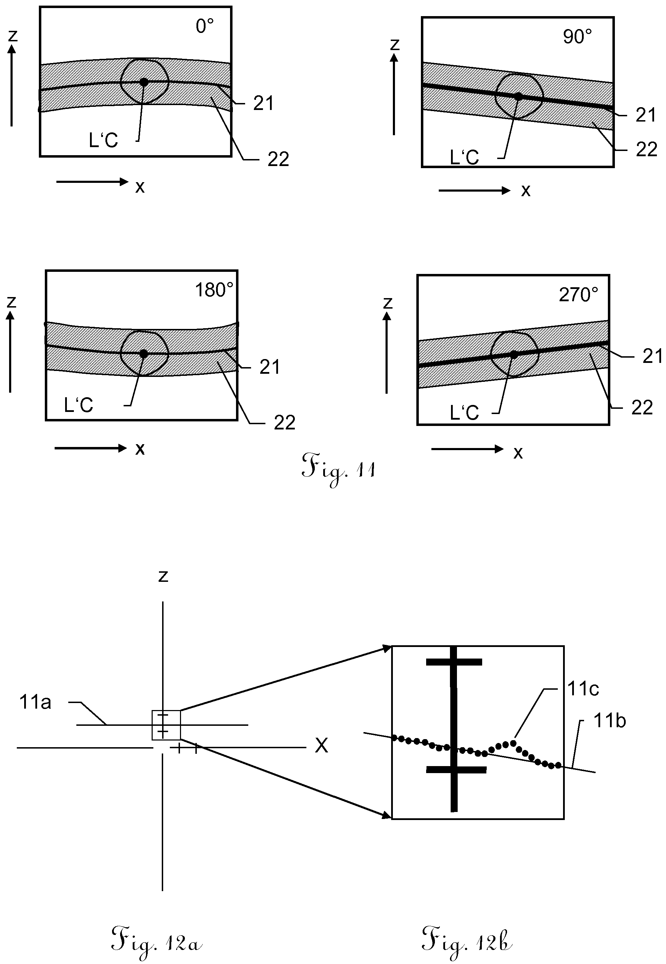

Zur systematischen, gezielten Ermittlung eines Ebenen- oder Sattelfehlers ist in der Praxis ein Vorgehen zu bevorzugen, das anhand der Figuren 10a, 10b und 11 illustriert ist.

Wie anhand von Figur 9 ersichtlich, kann die erfindungsgemässe Vorrichtung auch zur Überprüfung verwendet werden, ob eine soll-vertikal aufgespannte Ebene, die durch ein Laserstrahl-Projektionsgerät erzeugt wird, auch tatsächlich treu vertikal ist.

Dafür kann die erfindungsgemässe Laserstrahlhorizontalitätstreue-Überprüfvorrichtung zudem eine Funktionalität zur Überprüfung einer Ebenen-Vertikalitätstreue aufweisen. Dies ist speziell anwendbar für solche spezielle Laserstrahl-Projektionsgeräte, die durch den emittierten Laserstrahl zur Aufspannung einer vertikalen Ebene geeignet sind. Beispielsweise kann dies ein Rotationslaser mit Lay-Down-Stellungs-Funktionalität sein, welcher - in dem Fachmann in an sich bekannter Weise - in einer Lay-Down-Stellung zur um eine horizontale Achse rotierenden Aussendung des Laserstrahls und somit zur Erzeugung einer vertikalen Ebene ausgebildet ist, wobei die Vertikaleinstellung der Ebene dabei automatisch durch den Rotationslaser und einen dafür im Rotationslaser integriert vorgesehenen Selbst-Vertikalisier-Mechanismus erfolgen kann.

Als anderes Beispiel für ein solches zu überprüfendes Laserstrahl-Projektionsgerät kann dabei auch ein Linienlaser, der zur Aussendung eines vertikal aufgefächerten Laserstrahls ausgebildet ist, in Frage kommen.

Im Rahmen der Funktionalität zur Überprüfung der Ebenen-Vertikalitätstreue kann dabei wiederum eine durch den Bildsensor erfolgende Aufnahme eines Bildes von dem in das Objektiv einfallenden Laserstrahl auslösbar sein (oder automatisch ausgelöst werden) und durch die Auswerteeinheit automatisch durchgeführt werden:
- eine Ermittlung von Bildpositionsinformation über ein im Bild durch den erfassten Laserstrahl erzeugtes Abbild 22 von der vertikalen Ebene durch Bildverarbeitung, insbesondere wobei als Bildpositionsinformation eine Position und ein Verlauf einer durch den Laserstrahl im Bild definierten Ebenen-Linie 21 ermittelt wird anhand von einer Verarbeitung des Abbilds 22, und
- eine Quantifizierung der Vertikalitätstreue abhängig von der ermittelten Bildpositionsinformation sowie abhängig von den gespeicherten Kalibrierparametern, insbesondere durch Vergleich des Verlaufs der Ebenen-Linie 21 mit einer Richtung Z im Bild, die für eine - hypothetisch durch eine reine elevative Richtungsabweichung von der optischen Achse bewirkte - Versatzrichtung einer Laserstrahl-Auftreffposition auf dem Bildsensor steht.

Ein reiner (Links-Rechts-)Versatz der im Bild ermittelbaren Ebenen-Linie 21 von einem Bildzentrum kann für diese Funktionalität dabei irrelevant sein. Wesentlich ist für die Auswertung im Rahmen dieser Funktionalität dabei, ob der Verlauf der Ebenen-Linie 21 (d.h. die Richtung des Verlaufs der Linie im Bild) parallel zu der kalibrierten Richtung Z erfolgt (wobei für diesen Fall die Vertikalität bestätigt werden kann), und wenn nein, um wie viel sich die Richtung des Verlaufs der Ebenen-Linie 21 im Bild von der Richtung Z unterscheidet (was dann in einen (Winkel-)Wert für die Abweichung von der Vertikalität übersetzt werden kann).

Fig. 10a illustriert eine Vermessung der Horizontalitätstreue des Laserstrahl-Projektionsgeräts 20 mittels Positionierung einer erfindungsgemässen Laserstrahlhorizontalitätstreue-Überprüfvorrichtung 10 an vier verschiedenen Positionen im Umkreis des Laserstrahl-Projektionsgeräts 20. Alternativ kann, wie in Fig. 10b gezeigt, die Laserstrahlhorizontalitätstreue-Überprüfvorrichtung 10 ortsfest, beispielweise auf einer Plattform 24, angeordnet sein, und das zu überprüfende Laserstrahl-Projektionsgerät 20 gegenüber der Vorrichtung 10 rotierbar auf einer drehbaren Plattform und beispielsweise damit zusammen auf derselben Plattform wie die Laserstrahlhorizontalitätstreue-Überprüfvorrichtung 10 montiert sein. Dadurch wird vorteilhaft ermöglicht, die Horizontalitäts- und/oder Ebenentreue der Lichtaussendung durch das Laserstrahl-Projektionsgerät 20 kontinuierlich über einen vollständigen Raumwinkelbereich von 360° der relativen Orientierung von Laserstrahlhorizontalitätstreue-Überprüfvorrichtung 10 und Laserstrahl-Projektionsgerät 20 zueinander zu vermessen (oder punktuell z.B. in acht oder sechzehn verschiedenen Winkelstellungen).

Fig. 11 illustriert mögliche, anhand der in Fig. 10a oder Fig. 10b dargestellten Anordnung erzeugte Messergebnisse, für eine gegenseitige Positionierung der Laserstrahlhorizontalitätstreue-Überprüfvorrichtung und des Laserstrahl-Projektionsgeräts zueinander unter Winkeln von 0°, 90°, 180° und 270°. Dabei kann, wie hier angedeutet, jeweils sowohl die Mittelposition L'C des Laserstrahls als auch die über den jeweils erfassten Azimutalwinkelbereich erzeugte Verlauf 21 der Referenzebene 22 gemessen und ausgewertet werden. Die hier illustrierte Situation, mit einem Maximum (hinsichtlich der Z-Richtung) der Laserstrahl-Auftreffposition L'C bei 0°, einem Minimum bei 180° und einem im Winkelbereich dazwischen (bei 90° und 270°) kontinuierlich schrägen Verlauf, deutet z.B. auf das Vorliegen eines Ebenenfehlers hin (also einer ungewollten leichten Neigung der erzeugten Ebene gegenüber einer strikt horizontalen Ebene), was man insbesondere aus der Aggregation der Informationen aus den vier einzelnen Bildern ermitteln kann.

Mit diesen zuletzt beschriebenen Figuren wird eine Ausführungsform einer erfindungsgemässen Laserstrahlhorizontalitätstreue-Überprüfvorrichtung illustriert, welche eine Funktionalität zur Überprüfung einer Ebenentreue speziell für ein derart ausgebildetes Laserstrahl-Projektionsgerät aufweist, welches zur Aufspannung einer Referenzebene mit dem Laserstrahl ausgebildet ist, insbesondere für ein als laserfächeremittierender Linienlaser oder Rotationslaser ausgebildetes Laserstrahl-Projektionsgerät. Dabei ist im Rahmen der Funktionalität zur Überprüfung der Ebenentreue eine durch den Bildsensor erfolgende Aufnahme eines Bildes von dem in das Objektiv einfallenden Laserstrahl auslösbar, und durch die Auswerteeinheit werden automatisch die folgenden Schritte durchgeführt:
- Ermittlung von Bildpositionsinformation über ein im Bild durch den erfassten Laserstrahl erzeugtes Abbild 22 von der Referenzebene durch Bildverarbeitung, insbesondere wobei als Bildpositionsinformation eine Position und ein Verlauf einer durch den Laserstrahl im Bild definierten Referenzebenen-Linie 21 ermittelt wird anhand von einer Verarbeitung des Abbilds, und
- Quantifizierung der Ebenentreue abhängig von der ermittelten Bildpositionsinformation sowie abhängig von den gespeicherten Kalibrierparametern.

Zusätzlich oder alternativ können an unterschiedlichen Referenzebenenstellen durch den Bildsensor Bilder von dem an den jeweiligen Referenzebenenstellen in das Objektiv einfallenden Laserstrahl aufgenommen werden, und durch die Auswerteeinheit werden dann automatisch durchgeführt:
- eine Ermittlung von einer jeweiligen Bildposition L'C des jeweils aufgenommenen Laserstrahls für die jeweiligen mehreren Bilder und
- eine Quantifizierung der Ebenentreue durch Aggregation der jeweiligen ermittelten Bildpositionen, insbesondere unter Berücksichtigung der jeweiligen Referenzebenenstellen, an welcher die jeweiligen Bilder aufgenommen sind, sowie abhängig von den gespeicherten Kalibrierparametern.

Die Figur 12a zeigt ein Beispiel für ein quantitatives Messergebnis für eine Vermessung eines rotierenden Lasers mit einer erfindungsgemässen Laserstrahlhorizontalitätstreue-Überprüfvorrichtung. Figur 12b stellt einen vergrösserten Ausschnitt daraus dar. Der Laserstrahl 11a wird im Bereich des x-z-Achsenkreuzes abgebildet. Es ist ein Versatz in z-Richtung erkennbar. Durch eine Vergrösserung, wie in Figur 12b abgebildet, ist zudem zu erkennen, dass der Laserstrahl nicht völlig horizontal verläuft, sondern eine Abweichung von der Horizontaliät aufweist, deren Ausmass durch einen linearen Fit 11b feststellbar ist. Weiter sind mit der erfindungsgemässen Laserstrahlhorizontalitätstreue-Überprüfvorrichtung auch kleine Abweichungen von einer Linearität diagnostizierbar, die sich z.B. in einem lokalen Maximum 11c manifestieren.

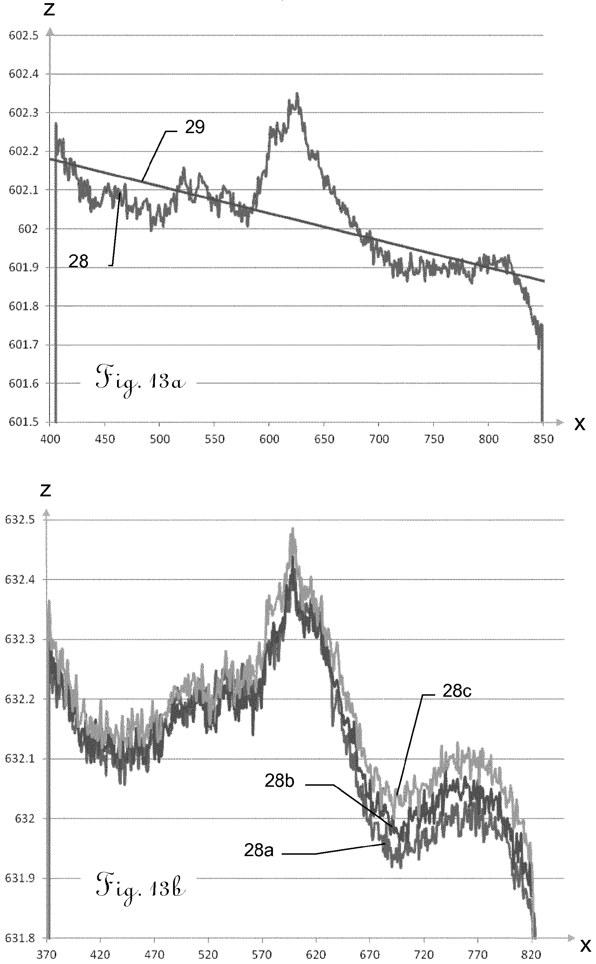

Die Figuren 13a und 13b zeigen reale, quantitative Ergebnisse für die Vermessung eines rotierenden Lasers mit einer erfindungsgemässen Laserstrahlhorizontalitätstreue-Überprüfvorrichtung, mit der Höhe Z der Abbildung des Laserstrahls auf dem Bildsensor als Funktion des überstrichenen Azimutalwinkelbereichs X. Die Skalierung der Achsen X und Z ist in Werten von Pixeln des Bildsensors, wobei ein Pixel einem Azimutalwinkelbereich von 6.5 Bogensekunden entspricht. Der in Fig. 12a in X-Richtung dargestellte Bereich entspricht also einem Azimutalwinkelbereich von 2835 Bogensekunden, und vom Bildsensor wurden dabei Messwerte in einem Z-Bereich zwischen 601.7 und 602.4 Pixeln, entsprechend einem Bereich von 4.4 Bogensekunden, erfasst. Die Belichtungszeit des Bildsensors sollte dabei z.B. einem vollen Umlauf des rotierenden Laserstrahls entsprechen. Bemerkenswert ist die sehr hohe Auflösung der erfindungsgemässen Messanordnung. Die rasch oszillierende Linie 28 repräsentiert den Verlauf der aktuellen Messwerte für den jeweiligen Neigungswert (bzw. die jeweilige Horizontalitätsabweichung) des einfallenden Laserstrahls als Funktion des Azimutalwinkels, und die durchgezogene Linie 29 stellt einen linearen Fit, beispielsweise nach der Methode der in Summe kleinsten quadratischen Abweichungen, von diesen Messwerten dar.

Zum einen ist dabei eine leichte negative Steigung der Messkurve von niedrigen X-Pixelwerten in Richtung höherer X-Pixelwerte auslesbar, was einer lokal kleiner werdenden Neigungs-Abweichung des jeweils einfallenden Laserstrahls von der Horizontalität und somit - global bzw. über einen weiten Teil oder gar den gesamten Umfang betrachtet - entweder einen Sattel- oder einen Ebenenfehler andeuten kann.

Erfahrungsgemäss führt ein Sattelfehler zu einer Abweichung von typischerweise 10 bis 20 Bogensekunden, betrachtet über einen weiteren Winkelbereich von z.B. 90-180°.

Zum anderen fällt eine ausgeprägte Erhebung bei etwa 600 Pixeln in X-Richtung auf, welche einer schlagartigen elevativen Richtungs-Abweichung von der gefitteten Grundlinie in Höhe von umgerechnet etwa zwei Bogensekunden entspricht.

Mit der hier registrierten Abweichung von etwa 2 Bogensekunden von einem linearen Verlauf lässt sich wahrscheinlicher das Vorhandensein einer geringfügigeren Störung, beispielsweise eines Lager-Fehlers des rotierenden Umlenkelements des Rotationslasers, diagnostizieren.

Fig. 13b illustriert die Reproduzierbarkeit der Messergebnisse, jeweils wieder aufgenommen durch Belichtung des Bildsensors während einer vollen Umlaufzeit des Rotationslasers. Dargestellt ist der Verlauf der Messergebnisse beim 1. Umlauf (Kurve 28a), 70. Umlauf (Kurve 28b) und 140. Umlauf (Kurve 28c). Bemerkenswert ist die ausserordentlich hohe Reproduzierbarkeit der Messergebnisse, insbesondere hinsichtlihc Schwankungen eines von der Horizontalität entsprechenden Verlaufs über den überstrichenen Azimutalwinkelbereich. Hinsichtlich des erkennbaren leichten Ansteigens oder Drifts der Z-Werte, zwischen dem 1. und dem 140. Umlauf, wird darauf hingewiesen, dass diese Änderung nur maximal 0.1 Pixel entsprechend 0.6 Bogensekunden beträgt.

Insbesondere die realen experimentellen Daten von Fig. 13a und 13b demonstrieren ausserdem, dass die erfindungsgemässe Laserstrahlhorizontalitätstreue-Überprüfvorrichtung geeignet ist, Daten mit einer Genauigkeit im tiefen Subpixel-Bereich, d.h. von deutlich weniger als 0.1 Pixeln, zu liefern.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Laserstrahlhorizontalitätstreue-Überprüfvorrichtung (10) für ein eine Strahlhorizontierfunktionalität, insbesondere eine Strahl-Selbsthorizontierfunktionalität, aufweisendes Laserstrahl-Projektionsgerät (20) für Arbeiten im Bau- und/oder Innenausbau, insbesondere einen Rotationslaser oder einen Linien- oder Punktlaser, wobei die Laserstrahlhorizontalitätstreue-Überprüfvorrichtung (10) aufweist
• ein Teleskop (1) mit
□ einem Abschwächungsfilter (2),
□ einem vergrössernd wirkenden Objektiv (3), welches eine optische Achse (A) definiert, und
□ einem in einer Bildebene (4) des Objektivs (3) angeordneten flächigen Bildsensor (5) zur Aufnahme eines Bildes von einem in das Objektiv (3) einfallenden Laserstrahl (L), wobei ein Fokus derart eingestellt bzw. einstellbar ist, dass parallel zu der optischen Achse verlaufende und in das Objektiv einfallende Strahlen über die gesamte Apertur des Objektivs jeweils in einem selben Punkt auf der Bildebene zusammenfallen und abgebildet werden und somit durch den Bildsensor in einem einzigen, selben Bildpunkt erfasst werden,
• einen Eigenneigungskompensator (6, 6') und
• eine Auswerteeinheit (7) ausgebildet zur automatischen Durchführung von
□ einer Ermittlung einer Bildposition des im Bild aufgenommenen Laserstrahls (L) anhand von Bildverarbeitung und
□ einer Quantifizierung der Laserstrahlhorizontalitätstreue mit einer Übersetzung der ermittelten Bildposition in einen Laserstrahl-Neigungswert anhand von einer Übersetzungsregel, die mit von einer Position des Bildsensors (5) im Teleskop (1) abhängigen Kalibrierparametern zusammenhängt.

2. Laserstrahlhorizontalitätstreue-Überprüfvorrichtung (10) nach Anspruch 1,
**dadurch gekennzeichnet, dass**
der Abschwächungsfilter (2) derart ausgebildet ist, dass eine Vielzahl von unterschiedlichen Abschwächungsgrade bereitgestellt ist, aus welchen
• benutzerseitig jeweils ein Abschwächungsgrad wählbar und einstellbar ist oder
• durch Auswertung von einem Test-Bild, das von dem in das Objektiv (3) einfallenden Laserstrahl (L) aufgenommenen wird, ein Abschwächungsgrad automatisch ausgewählt und einzustellen veranlasst wird, insbesondere wobei
• der Abschwächungsfilter (2) derart ausgebildet ist, dass in einem breiten Abschwächungsgrad-Bereich stufenlos jeweils ein Abschwächungsgrad wählbar und einstellbar ist, insbesondere wobei der Abschwächungsfilter (2) mindestens einen drehbar angeordneten linearen Polarisator aufweist, im Speziellen zwei oder mehrere gegeneinander drehbar angeordnete lineare Polarisatoren,
und/oder
• sich der Abschwächungsfilter (2) im Wesentlichen gleichmässig über eine gesamte Objektivquerschnittsfläche als Apertur erstreckt.

3. Laserstrahlhorizontalitätstreue-Überprüfvorrichtung (10) nach Anspruch 1 oder 2,
**dadurch gekennzeichnet, dass**
das Teleskop (1) derart blendenfrei ausgebildet ist und der Bildsensor (5) und das Objektiv (3) derart im Teleskop (1) zusammenwirkend angeordnet sind, dass durch den Bildsensor (5) ein einfallender Laserstrahl (L) über mindestens einen weiten Teil der Objektivquerschnittfläche als Apertur erfassbar ist, insbesondere im Wesentlichen über die gesamte Objektivquerschnittfläche.

4. Laserstrahlhorizontalitätstreue-Überprüfvorrichtung (10) nach einem der Ansprüche 1 bis 3,
**dadurch gekennzeichnet, dass**
• das Teleskop (1) ferner ein im Strahlengang dem Objektiv (3) nachgeordnetes Fokussierglied (8) aufweist,
und/oder
• der Eigenneigungskompensator (6, 6') ausgebildet ist
□ als opto-mechanischer Selbsthorizontierer (6') mit einem im Strahlgang des Teleskops (1) zwischen dem Objektiv (3) und dem Bildsensor (5) angeordneten opto-mechanischen Element zur Selbsthorizontierung der optischen Achse des Teleskops (1)
oder
□ als elektronischer Neigungsberücksichtiger mit einem hochpräzisen Neigungssensor zur Bestimmung eines von einer aktuellen Neigungsstellung des Teleskops (1) abhängigen Teleskop-Neigungswertes, wobei der Teleskop-Neigungswert durch die Auswerteeinheit (7) automatisch berücksichtigt wird bei der automatisch durchgeführten Übersetzung der Bildposition in den Laserstrahl-Neigungswert.

5. Laserstrahlhorizontalitätstreue-Überprüfvorrichtung (10) nach einem der Ansprüche 1 bis 4,
**dadurch gekennzeichnet, dass**
die gespeicherten Kalibrierparameter stehen für
• eine Abbildungsposition (A') der optischen Achse (A) im Bild sowie insbesondere eine Richtung im Bild, die für eine - hypothetisch durch einen reinen Horizontalitätsfehler bewirkte - Versatzrichtung einer Laserstrahl-Auftreffposition auf dem Bildsensor (5) steht,
• eine - insbesondere im Bild über den gesamten Bildbereich im Wesentlichen horizontal verlaufende - Null-Neigungslinie im Bild,
und/oder
• eine Look-Up-Tabelle, aus welcher für jeweilige Bildpositionen direkt ein zugeordneter Laserstrahl-Neigungswert abgelegt ist.

6. Laserstrahlhorizontalitätstreue-Überprüfvorrichtung (10) nach Anspruch 5,
**dadurch gekennzeichnet, dass**
für die Übersetzung
• ein im Bild zwischen der Bildposition und der Abbildungsposition in jener Richtung vorhandener Abstand bestimmt wird, die als Richtung angenommen wird oder in den Kalibrierparametern abgelegt ist, die für eine - hypothetisch durch einen reinen Horizontalitätsfehler bewirkte - Versatzrichtung einer Laserstrahl-Auftreffposition auf dem Bildsensor (5) steht,
und dieser Abstand - insbesondere entsprechend eines durch das Objektiv-Abbildungsverhältnis definierten Übersetzungs-Faktors - in den Laserstrahl-Neigungswert übersetzt wird,
beziehungsweise
• ein im Bild zwischen der Bildposition und der Null-Neigungslinie vorhandener Abstand bestimmt wird, und dieser Abstand - insbesondere entsprechend eines durch das Objektiv-Abbildungsverhältnis definierten Übersetzungs-Faktors - in den Laserstrahl-Neigungswert übersetzt wird,
beziehungsweise
• der in der Look-Up-Tabelle der ermittelten Bildposition zugeordnete Laserstrahl-Neigungswert ausgelesen wird,
insbesondere wobei der Laserstrahl-Neigungswert als Neigungswinkel des Laserstrahls (L) ausgegeben wird.

7. Laserstrahlhorizontalitätstreue-Überprüfvorrichtung (10) nach einem der Ansprüche 1 bis 6,
**dadurch gekennzeichnet, dass**
• für die Auswerteeinheit (7) in einem Speicher abrufbar für verschiedene Laserstrahlquerschnittsformen jeweils ein Muster, insbesondere eine Schablone, gespeichert ist,
• ein mit der Laserstrahlquerschnittsform des einfallenden Laserstrahls (L) korrespondierendes Muster benutzerseitig auswählbar ist oder automatisch durch Bildverarbeitung mit Merkmalserkennung ausgewählt wird,
• und durch die Auswerteeinheit (7) bei der Ermittlung der Bildposition
□ das ausgewählte Muster anhand einer Best-Fit-Methode im Bild mit dem aufgenommenen Laserstrahl (L) in Übereinstimmung gebracht wird, insbesondere mit Subbildpunktgenauigkeit, und
□ anhand der in Übereinstimmung gebrachten Lage des Musters im Bild die Bildposition des im Bild aufgenommenen Laserstrahls (L) bestimmt wird, insbesondere mit Subbildpunktgenauigkeit,
• insbesondere wobei für jedes gespeicherte Muster eine Information mitgespeichert ist, die eine musterintern definierte, für die letztendliche Ermittlung der Bildposition heranzuziehende Muster-Position innerhalb des Musters ableiten lässt, im Speziellen wobei die Information die musterintern definierte Muster-Position selbst ist oder ein definierter Muster-Positions-Bestimmungsalgorithmus wie etwa ein Musterschwerpunkt-Bestimmungsalgorithmus.

8. Laserstrahlhorizontalitätstreue-Überprüfvorrichtung (10) nach einem der Ansprüche 1 bis 7,
**dadurch gekennzeichnet, dass**
das Teleskop (1) ferner aufweist einen im Strahlengang angeordneten Strahlteiler (9) zur Aufteilung des Strahlengangs in einen ersten Kanal (11) und einen zweiten Kanal (12) derart, dass im ersten Kanal (11) eine erste Bildebene (4) des Objektivs (3) und im zweiten Kanal (12) eine zweite Bildebene (4') des Objektivs (3) erzeugt wird, wobei
• in der ersten Bildebene (4) der Bildsensor (5) und
• in der zweiten Bildebene (4') eine einen Indikator für die optische Achse tragende Optik (13), insbesondere mit Fadenkreuz, und ein dieser Optik 813) nachgeordnetes Okular (14) zur mit dem Auge eines Benutzers erfolgenden Betrachtung des in der zweiten Bildebene (4') erzeugten Zwischenbilds angeordnet sind.

9. Laserstrahlhorizontalitätstreue-Überprüfvorrichtung (10) nach einem der Ansprüche 1 bis 8,
**dadurch gekennzeichnet, dass**
die Laserstrahlhorizontalitätstreue-Überprüfvorrichtung (10) zudem eine Funktionalität zur Überprüfung einer Laserstrahlazimuttreue speziell für ein derart ausgebildetes Laserstrahl-Projektionsgerät (20) aufweist, welches ein - einen in einer Makroperspektive als punktförmig betrachtbaren Querschnitt aufweisenden - Laserstrahl (L') aussendet, wobei im Rahmen der Funktionalität zur Überprüfung der Laserstrahlazimuttreue eine durch den Bildsensor (5) erfolgende Aufnahme eines Bildes von dem in das Objektiv (3) einfallenden Laserstrahl (L) auslösbar ist und durch die Auswerteeinheit (7) automatisch durchgeführt werden
• eine Ermittlung einer Bildposition des im Bild aufgenommenen Laserstrahls (L) und
• eine Quantifizierung der Laserstrahlazimuttreue mit einer Übersetzung der ermittelten Bildposition in einen Laserstrahl-Azimutalrichtungswert anhand von einer von den gespeicherten Kalibrierparametern abhängigen Übersetzungsregel,
insbesondere wobei dafür die gespeicherten Kalibrierparameter stehen für
□ eine Abbildungsposition der optischen Achse im Bild sowie insbesondere eine Richtung im Bild, die für eine - hypothetisch durch eine reine azimutale Richtungsabweichung von der optischen Achse bewirkte - Versatzrichtung einer Laserstrahl-Auftreffposition auf dem Bildsensor (5) steht,
□ eine - insbesondere im Bild über den gesamten Bildbereich im Wesentlichen vertikal verlaufende - Null-Azimutalabweichungslinie im Bild,
und/oder
□ eine Look-Up-Tabelle, aus welcher für jeweilige Bildpositionen direkt ein zugeordneter Laserstrahl-Azimutalrichtungswert abgelegt ist,
und für die Übersetzung
□ ein im Bild zwischen der Bildposition und der Abbildungsposition in jener Richtung vorhandener Abstand bestimmt wird, die als Richtung angenommen wird oder in den Kalibrierparametern abgelegt ist, die für eine - hypothetisch durch eine reine azimutale Richtungsabweichung von der optischen Achse bewirkte - Versatzrichtung einer Laserstrahl-Auftreffposition auf dem Bildsensor (5) steht, und dieser Abstand - insbesondere entsprechend eines durch das Objektiv-Abbildungsverhältnis definierten Übersetzungs-Faktors - in den Laserstrahl-Azimutalrichtungswert übersetzt wird, beziehungsweise
□ ein im Bild zwischen der Bildposition und der Null-Azimutalabweichungslinie vorhandener Abstand bestimmt wird,
und dieser Abstand - insbesondere entsprechend eines durch das Objektiv-Abbildungsverhältnis definierten Übersetzungs-Faktors - in den Laserstrahl-Azimutalrichtungswert übersetzt wird, beziehungsweise
□ der in der Look-Up-Tabelle der ermittelten Bildposition der zugeordnete Laserstrahl-Azimutalrichtungswert ausgelesen wird, insbesondere wobei der Laserstrahl-Azimutalrichtungswert als Winkel des Laserstrahls (L) ausgegeben wird.

10. Laserstrahlhorizontalitätstreue-Überprüfvorrichtung (10) nach einem der Ansprüche 1 bis 9,
**dadurch gekennzeichnet, dass**
die Laserstrahlhorizontalitätstreue-Überprüfvorrichtung (10) zudem eine Funktionalität zur Überprüfung einer Laserstrahlneigungstreue speziell für ein derart ausgebildetes Laserstrahl-Projektionsgerät (20) aufweist, welches eine Strahl-Neigungsfunktion mit benutzerseitig definiert wählbarer und - insbesondere nach Wahl sich selbsttätig - einstellbarer Soll-Neigung für den Laserstrahl aufweist, insbesondere für ein als Neigungs-Rotationslaser mit automatischem Single- oder Dual-Slope-Mechanismus ausgebildetes Laserstrahl-Projektionsgerät (20),
wobei im Rahmen der Funktionalität zur Überprüfung der Laserstrahlneigungstreue, nach Einstellung der definierten Soll-Neigung für den Laserstrahl (L) am Laserstrahl-Projektionsgerät (20), eine durch den Bildsensor (5) erfolgende Aufnahme eines Bildes von dem in das Objektiv (3) einfallenden Laserstrahl (L) auslösbar ist und durch die Auswerteeinheit (7) automatisch durchgeführt werden
• eine Ermittlung einer Bildposition des im Bild aufgenommenen Laserstrahls (L) und
• eine Quantifizierung der Laserstrahlneigungstreue mit einer Übersetzung der ermittelten Bildposition in einen Laserstrahl-Neigungswert anhand von einer von den gespeicherten Kalibrierparametern abhängigen Übersetzungsregel, sodass der dabei erhaltene Laserstrahl-Neigungswert mit der definiert am Laserstrahl-Projektionsgerät (20) eingestellten Soll-Neigung vergleichbar ist.

11. Laserstrahlhorizontalitätstreue-Überprüfvorrichtung (10) nach einem der Ansprüche 1 bis 10,
**dadurch gekennzeichnet, dass**
• die Auswerteeinheit (7) als Steuer- und Auswerteinheit ausgebildet ist und eine nach Auslösung völlig automatisch ablaufende Funktionalität zur Überprüfung der Laserstrahlhorizontalitätstreue bereitgestellt ist, in dessen Rahmen gesteuert durch die Steuer- und Auswerteinheit eine durch den Bildsensor (5) erfolgende Aufnahme eines Bildes von dem in das Objektiv (3) einfallenden Laserstrahl (L) automatisch veranlasst und anschliessend automatisch das Durchführen der Ermittlung und der Quantifizierung gestartet wird,
• insbesondere wobei auch die Funktionalitäten zur Überprüfung der Laserstrahlazimuttreue beziehungsweise der Laserstrahlneigungstreue als nach Auslösung völlig automatisch ablaufende Funktionalitäten bereitgestellt sind und dabei gesteuert durch die Steuer- und Auswerteinheit (7) eine durch den Bildsensor (5) erfolgende Aufnahme eines Bildes von dem in das Objektiv (3) einfallenden Laserstrahl (L) automatisch veranlasst und anschliessend automatisch das Durchführen der Ermittlung und der Quantifizierung gestartet wird.

12. Laserstrahlhorizontalitätstreue-Überprüfvorrichtung (10) nach einem der Ansprüche 1 bis 11,
**dadurch gekennzeichnet, dass**
die Laserstrahlhorizontalitätstreue-Überprüfvorrichtung (10) zudem eine Funktionalität zur Überprüfung einer Ebenentreue speziell für ein derart ausgebildetes Laserstrahl-Projektionsgerät (20) aufweist, welches zur Aufspannung einer Referenzebene mit dem Laserstrahl ausgebildet ist, insbesondere für ein als laserfächeremittierender Linienlaser oder Rotationslaser ausgebildetes Laserstrahl-Projektionsgerät (20),
wobei im Rahmen der Funktionalität zur Überprüfung der Ebenentreue
• eine durch den Bildsensor (5) erfolgende Aufnahme eines Bildes von dem in das Objektiv (3) einfallenden Laserstrahl (L) auslösbar ist und durch die Auswerteeinheit (7) automatisch durchgeführt werden
□ eine Ermittlung von Bildpositionsinformation über ein im Bild durch den erfassten Laserstrahl (L) erzeugtes Abbild von der Referenzebene durch Bildverarbeitung, insbesondere wobei als Bildpositionsinformation eine Position und ein Verlauf einer durch den Laserstrahl (L) im Bild definierten Referenzebenen-Linie ermittelt wird anhand von einer Verarbeitung des Abbilds, und
□ eine Quantifizierung der Ebenentreue abhängig von der ermittelten Bildpositionsinformation sowie abhängig von den gespeicherten Kalibrierparametern, und/oder
• an unterschiedlichen Referenzebenenstellen durch den Bildsensor (5) Bilder von dem an den jeweiligen Referenzebenenstellen jeweils in das Objektiv (3) einfallenden Laserstrahl (L) aufnehmbar ist und durch die Auswerteeinheit (7) automatisch durchgeführt werden
□ eine Ermittlung von einer jeweiligen Bildposition des jeweils aufgenommenen Laserstrahls (L) für die jeweiligen mehreren Bilder und
□ eine Quantifizierung der Ebenentreue durch Aggregation der jeweiligen ermittelten Bildpositionen, insbesondere unter Berücksichtigung der jeweiligen Referenzebenenstellen, an welcher die jeweiligen Bilder aufgenommen sind, sowie abhängig von den gespeicherten Kalibrierparametern.

13. Laserstrahlhorizontalitätstreue-Überprüfvorrichtung (10) nach einem der Ansprüche 1 bis 12,
**dadurch gekennzeichnet, dass**
die Laserstrahlhorizontalitätstreue-Überprüfvorrichtung (10) zudem eine Funktionalität zur Überprüfung einer Ebenen-Vertikalitätstreue speziell für ein derart ausgebildetes Laserstrahl-Projektionsgerät (20) aufweist, welches durch den emittierten Laserstrahl zur Aufspannung einer vertikalen Ebene geeignet ist, insbesondere für ein als Rotationslaser mit Lay-Down-Stellungs-Funktionalität oder als vertikallaserfächeremittierender Linienlaser ausgebildetes Laserstrahl-Projektionsgerät (20),
wobei im Rahmen der Funktionalität zur Überprüfung der Ebenen-Vertikalitätstreue eine durch den Bildsensor (5) erfolgende Aufnahme eines Bildes von dem in das Objektiv (3) einfallenden Laserstrahl (L) auslösbar ist und durch die Auswerteeinheit (7) automatisch durchgeführt werden
• eine Ermittlung von Bildpositionsinformation über ein im Bild durch den erfassten Laserstrahl (L) erzeugtes Abbild von der vertikalen Ebene durch Bildverarbeitung, insbesondere wobei als Bildpositionsinformation eine Position und ein Verlauf einer durch den Laserstrahl (L) im Bild definierten Ebenen-Linie ermittelt wird anhand von einer Verarbeitung des Abbilds, und
• eine Quantifizierung der Vertikalitätstreue abhängig von der ermittelten Bildpositionsinformation sowie abhängig von den gespeicherten Kalibrierparametern, insbesondere durch Vergleich des Verlaufs der Ebenen-Linie mit einer Richtung im Bild, die für eine - hypothetisch durch eine reine elevative Richtungsabweichung von der optischen Achse bewirkte - Versatzrichtung einer Laserstrahl-Auftreffposition auf dem Bildsensor (5) steht.

14. System (100) aus einer Laserstrahlhorizontalitätstreue-Überprüfvorrichtung (10) nach einem der Ansprüche 1 bis 13 und einem eine Strahl-Selbsthorizontierfunktionalität aufweisenden Laserstrahl-Projektionsgerät (20) für Arbeiten im Bau- und/oder Innenausbau, insbesondere Rotationslaser oder Linien- oder Punktlaser, insbesondere wobei die Laserstrahlhorizontalitätstreue-Überprüfvorrichtung (10) und das Laserstrahl-Projektionsgerät (20) jeweils eine Datenkommunikations-Schnittstelle aufweisen, und wobei die Laserstrahlhorizontalitätstreue-Überprüfvorrichtung (10) zur Generierung von von dem Laserstrahl-Neigungswert abhängigen Daten und zur Kommunikation dieser Daten an das Laserstrahl-Projektionsgerät (20) ausgebildet ist, sodass die Strahl-Horizontierfunktionalität, insbesondere Strahl-Selbsthorizontierfunktionalität, des Laserstrahl-Projektionsgeräts (20) anhand von diesen erhaltenen Daten rekalibrierbar ist, insbesondere wobei das Laserstrahl-Projektionsgerät (20) zur selbsttätigen automatischen Rekalibrierung seiner Strahl-Horizontierfunktionalität, insbesondere Strahl-Selbsthorizontierfunktionalität, anhand von diesen erhaltenen Daten ausgebildet ist.

15. Verfahren zur Überprüfung der Laserstrahlhorizontalitätstreue von einem eine Strahl-Selbsthorizontierfunktionalität aufweisenden Laserstrahl-Projektionsgerät (20), welches für Arbeiten im Bau- und/oder Innenausbau ausgelegt ist, insbesondere Rotationslaser oder Linien- oder Punktlaser, wobei das Verfahren mit einem Teleskop (1) erfolgt, welches aufweist
• einen Abschwächungsfilter (2),
• ein vergrössernd wirkendes Objektiv (3), welches eine optische Achse (A) definiert, und
• einen in einer Bildebene (4) des Objektivs (3) angeordneten flächigen Bildsensor (5) zur Erfassung eines Bildes von einem in das Objektiv (3) einfallenden Laserstrahl (L), wobei ein Fokus derart eingestellt bzw. einstellbar ist, dass parallel zu der optischen Achse verlaufende und in das Objektiv einfallende Strahlen über die gesamte Apertur des Objektivs jeweils in einem selben Punkt auf der Bildebene zusammenfallen und abgebildet werden und somit durch den Bildsensor in einem einzigen, selben Bildpunkt erfasst werden,
und wobei im Rahmen des Verfahrens erfolgen
• ein Kompensieren einer Neigung des Teleskops (1),
• ein Aufnehmen eines Bildes von einem in das Objektiv (3) einfallenden Laserstrahl (L),
• ein Ermitteln einer Bildposition des im Bild aufgenommenen Laserstrahls (L) anhand von Bildverarbeitung und
• ein Quantifizieren der Laserstrahlhorizontalitätstreue mit einem Übersetzen der ermittelten Bildposition in einen Laserstrahl-Neigungswert anhand von einer Übersetzungsregel, die mit von einer Position des Bildsensors (5) im Teleskop abhängigen Kalibrierparametern zusammenhängt.

## Claims

1. A laser beam horizontal trueness testing device (10) for a laser beam projection apparatus (20) having a beam leveling functionality, in particular a beam self-leveling functionality, for construction and/or interior finishing work, in particular a rotation laser or a line or point laser, wherein the laser beam horizontal trueness testing device (10) comprises
• a telescope (1) having
□ an attenuation filter (2),
□ an objective (3) having a magnifying effect and defining an optical axis (A), and
□ a planar image sensor (5) arranged in an image plane (4) of the objective (3) and serving for capturing an image from a laser beam (L) incident in the objective (3),
wherein a focus is set or settable in such a way that beams running parallel to the optical axis and incident in the objective coincide and are imaged over the entire aperture of the objective in each case at a same point on the image plane and are thus detected by the image sensor in a single, identical pixel,
• an inherent inclination compensator (6, 6'), and
• an evaluation unit (7) configured for automatically carrying out
□ a determination of an image position of the laser beam (L) captured in the image on the basis of image processing and
□ a quantification of the laser beam horizontal trueness with a translation of the determined image position into a laser beam inclination value on the basis of a translation rule related to calibration parameters dependent on a position of the image sensor (5) in the telescope (1).

2. The laser beam horizontal trueness testing device (10) as claimed in claim 1,
**characterized in that**
the attenuation filter (2) is configured in such a way that a multiplicity of different degrees of attenuation are provided, from which
• a respective degree of attenuation is selectable and settable on the part of the user, or
• a degree of attenuation is automatically selected and caused to be set by evaluation of a test image captured from the laser beam (L) incident in the objective (3),
in particular wherein
• the attenuation filter (2) is configured in such a way that a respective degree of attenuation is selectable and settable continuously variably in a wide degree-of-attenuation range, in particular wherein the attenuation filter (2) has at least one rotatably arranged linear polarizer, specifically two or more linear polarizers arranged rotatably relative to one another,
and/or
• the attenuation filter (2) extends substantially uniformly over an entire objective cross-sectional area as aperture.

3. The laser beam horizontal trueness testing device (10) as claimed in claim 1 or 2,
**characterized in that**
the telescope (1) is configured in a diaphragm-free fashion, and the image sensor (5) and the objective (3) are arranged in a cooperating fashion in the telescope (1), in such a way that an incident laser beam (L) is detectable by the image sensor (5) over at least a wide part of the objective cross-sectional area as aperture, in particular substantially over the entire objective cross-sectional area.

4. The laser beam horizontal trueness testing device (10) as claimed in any one of claims 1 to 3, **characterized in that**
• the telescope (1) furthermore has a focusing element (8) disposed downstream of the objective (3) in the beam path,
and/or
• the inherent inclination compensator (6, 6') is configured
□ as an optomechanical self-leveler (6') having an optomechanical element for the self-leveling of the optical axis of the telescope (1), said optomechanical element being arranged between the objective (3) and the image sensor (5) in the beam path of the telescope (1), or
□ as an electronic inclination considerer having a high-precision inclination sensor for ascertaining a telescope inclination value dependent on a current inclination position of the telescope (1), wherein the telescope inclination value is automatically taken into consideration by the evaluation unit (7) in the automatically conducted translation of the image position into the laser beam inclination value.

5. The laser beam horizontal trueness testing device (10) as claimed in any one of claims 1 to 4, **characterized in that**
the stored calibration parameters represent
• an imaging position (A') of the optical axis (A) in the image and, in particular, a direction in the image, which represents an offset direction - brought about hypothetically by a pure horizontality error - of a laser beam impingement position on the image sensor (5),
• a zero inclination line - in particular running substantially horizontally over the entire image region in the image - in the image,
and/or
• a look-up table, from which an assigned laser beam inclination value is stored directly for respective image positions.

6. The laser beam horizontal trueness testing device (10) as claimed in claim 5,
**characterized in that**
for the translation
• a distance is ascertained which is present in the image between the image position and the imaging position **in that** direction which is assumed as direction or is stored in the calibration parameters and which represents an offset direction - brought about hypothetically by a pure horizontality error - of a laser beam impingement position on the image sensor (5),
and said distance - in particular in accordance with a translation factor defined by the objective imaging ratio - is translated into the laser beam inclination value,
and/or respectively
• a distance is ascertained which is present in the image between the image position and the zero inclination line,
and said distance - in particular in accordance with a translation factor defined by the objective imaging ratio - is translated into the laser beam inclination value,
and/or respectively
• the laser beam inclination value assigned to the determined image position in the look-up table is read out,
in particular wherein the laser beam inclination value is output as inclination angle of the laser beam (L).

7. The laser beam horizontal trueness testing device (10) as claimed in any one of claims 1 to 6, **characterized in that**
• a pattern, in particular a stencil, is in each case stored for different laser beam cross-sectional shapes in a memory retrievably for the evaluation unit (7),
• a pattern corresponding to the laser beam cross-sectional shape of the incident laser beam (L) is selectable on the part of the user or is automatically selected by image processing with feature recognition,
• and by means of the evaluation unit (7) when determining the image position
□ the selected pattern is matched on the basis of a best fit method in the image with the captured laser beam (L), in particular with subpixel accuracy, and
□ on the basis of the matched position of the pattern in the image, the image position of the laser beam (L) captured in the image is ascertained, in particular with subpixel accuracy,
• in particular wherein information is concomitantly stored for each stored pattern, which information allows the derivation of a pattern-internally defined pattern position to be used for the ultimate determination of the image position within the pattern, specifically wherein the information is the pattern-internally defined pattern position itself or a defined pattern position ascertaining algorithm such as a pattern centroid ascertaining algorithm.

8. The laser beam horizontal trueness testing device (10) as claimed in any one of claims 1 to 7, **characterized in that**
the telescope (1) furthermore has a beam splitter (9) arranged in the beam path and serving for splitting the beam path into a first channel (11) and a second channel (12) in such a way that a first image plane (4) of the objective (3) is produced in the first channel (11) and a second image plane (4') of the objective (3) is produced in the second channel (12), wherein
• the image sensor (5) is arranged in the first image plane (4), and
• an optical unit (13) carrying an indicator for the optical axis, in particular with a reticle, and an eyepiece (14) disposed downstream of said optical unit (13) and serving for a user's eye to view the intermediate image generated in the second image plane (4') are arranged in the second image plane (4').

9. The laser beam horizontal trueness testing device (10) as claimed in any one of claims 1 to 8, **characterized in that**
the laser beam horizontal trueness testing device (10) additionally has a functionality for testing a laser beam azimuth trueness especially for a laser beam projection apparatus (20) which is configured in this way and which emits a laser beam (L') - having a cross section that can be regarded as punctiform in a macro perspective -, wherein in the context of the functionality for testing the laser beam azimuth trueness a capture - carried out by the image sensor (5) - of an image from the laser beam (L) incident in the objective (3) is triggerable and the evaluation unit (7) automatically carries out
• a determination of an image position of the laser beam (L) captured in the image, and
• a quantification of the laser beam azimuth trueness with a translation of the determined image position into a laser beam azimuthal direction value on the basis of a translation rule dependent on the stored calibration parameters,
in particular wherein for this purpose the stored calibration parameters represent
□ an imaging position of the optical axis in the image and, in particular, a direction in the image, which represents an offset direction - brought about hypothetically by a pure azimuthal direction deviation from the optical axis - of a laser beam impingement position on the image sensor (5),
□ a zero azimuthal deviation line - in particular running substantially vertically over the entire image region in the image - in the image,
and/or
□ a look-up table, from which an assigned laser beam azimuthal direction value is stored directly for respective image positions,
and for the translation
□ a distance is ascertained which is present in the image between the image position and the imaging position **in that** direction which is assumed as direction or is stored in the calibration parameters and which represents an offset direction - brought about hypothetically by a pure azimuthal direction deviation from the optical axis - of a laser beam impingement position on the image sensor (5),
and said distance - in particular in accordance with a translation factor defined by the objective imaging ratio - is translated into the laser beam azimuthal direction value, and/or respectively
□ a distance is ascertained which is present in the image between the image position and the zero azimuthal deviation line,
and said distance - in particular in accordance with a translation factor defined by the objective imaging ratio - is translated into the laser beam azimuthal direction value, and/or respectively
□ the laser beam azimuthal direction value assigned to the determined image position in the look-up table is read out,
in particular wherein the laser beam azimuthal direction value is output as angle of the laser beam (L).

10. The laser beam horizontal trueness testing device (10) as claimed in any one of claims 1 to 9, **characterized in that**
the laser beam horizontal trueness testing device (10) additionally has a functionality for testing a laser beam inclination trueness especially for a laser beam projection apparatus (20) which is configured in this way and which has a beam inclination function with desired inclination for the laser beam, said desired inclination being selectable in a defined manner on the part of the user and settable - in particular optionally automatically -, in particular for a laser beam projection apparatus (20) configured as an inclination rotation laser with an automatic single- or dual-slope mechanism,
wherein in the context of the functionality for testing the laser beam inclination trueness, after the setting of the defined desired inclination for the laser beam (L) at the laser beam projection apparatus (20), a capture - carried out by the image sensor (5) - of an image from the laser beam (L) incident in the objective (3) is triggerable and the evaluation unit (7) automatically carries out
• a determination of an image position of the laser beam (L) captured in the image, and
• a quantification of the laser beam inclination trueness with a translation of the determined image position into a laser beam inclination value on the basis of a translation rule dependent on the stored calibration parameters, such that the laser beam inclination value obtained in this case is comparable with the desired inclination set in a defined manner at the laser beam projection apparatus (20).

11. The laser beam horizontal trueness testing device (10) as claimed in any one of claims 1 to 10, **characterized in that**
• the evaluation unit (7) is configured as a control and evaluation unit and a functionality for testing the laser beam horizontal trueness is provided, said functionality proceeding totally automatically after triggering, in the context of which, under the control of the control and evaluation unit, a capture - carried out by the image sensor (5) - of an image from the laser beam (L) incident in the objective (3) is automatically initiated and carrying out the determination and the quantification is subsequently started automatically,
• in particular wherein the functionalities for testing the laser beam azimuth trueness and respectively the laser beam inclination trueness are also provided as functionalities proceeding totally automatically after triggering and in this case, under the control of the control and evaluation unit (7), a capture - carried out by the image sensor (5) - of an image from the laser beam (L) incident in the objective (3) is automatically initiated and carrying out the determination and the quantification is subsequently started automatically.

12. The laser beam horizontal trueness testing device (10) as claimed in any one of claims 1 to 11, **characterized in that**
the laser beam horizontal trueness testing device (10) additionally has a functionality for testing a plane trueness especially for a laser beam projection apparatus (20) which is configured in this way and which is configured for spanning a reference plane with the laser beam, in particular for a laser beam projection apparatus (20) configured as a laser-fan-emitting line laser or rotation laser,
wherein in the context of the functionality for testing the plane trueness
• a capture - carried out by the image sensor (5) - of an image from the laser beam (L) incident in the objective (3) is triggerable and the evaluation unit (7) automatically carries out
□ a determination of image position information about an imaging - generated in the image by the detected laser beam (L) - from the reference plane by image processing, in particular wherein a position and a course of a reference plane line defined by the laser beam (L) in the image are determined as image position information on the basis of a processing of the imaging, and
□ a quantification of the plane trueness depending on the determined image position information and depending on the stored calibration parameters,
and/or
• at different reference plane locations the image sensor (5) can capture images from the laser beam (L) incident in each case in the objective (3) at the respective reference plane locations and the evaluation unit (7) automatically carries out
□ a determination of a respective image position of the respectively captured laser beam (L) for the respective plurality of images, and
□ a quantification of the plane trueness by aggregation of the respective determined image positions, in particular taking into consideration the respective reference plane locations at which the respective images are captured, and depending on the stored calibration parameters.

13. The laser beam horizontal trueness testing device (10) as claimed in any one of claims 1 to 12, **characterized in that**
the laser beam horizontal trueness testing device (10) additionally has a functionality for testing a plane verticality trueness especially for a laser beam projection apparatus (20) which is configured in this way and which is suitable for spanning a vertical plane by means of the emitted laser beam, in particular for a laser beam projection apparatus (20) configured as a rotation laser with lay-down position functionality or as a vertical-laser-fan-emitting line laser,
wherein in the context of the functionality for testing the plane verticality trueness a capture - carried out by the image sensor (5) - of an image from the laser beam (L) incident in the objective (3) is triggerable and the evaluation unit (7) automatically carries out
• a determination of image position information about an imaging - generated in the image by the detected laser beam (L) - from the reference plane by image processing, in particular wherein a position and a course of a plane line defined by the laser beam (L) in the image are determined as image position information on the basis of a processing of the imaging, and
• a quantification of the verticality trueness depending on the determined image position information and depending on the stored calibration parameters, in particular by comparison of the course of the plane line with a direction in the image which represents an offset direction - brought about hypothetically by a pure elevational direction deviation from the optical axis - of a laser beam impingement position on the image sensor (5).

14. A system (100) comprising a laser beam horizontal trueness testing device (10) as claimed in any one of claims 1 to 13 and a laser beam projection apparatus (20) having a beam self-leveling functionality for construction and/or interior finishing work, in particular a rotation laser or line or point laser,
in particular wherein the laser beam horizontal trueness testing device (10) and the laser beam projection apparatus (20) in each case comprise a data communication interface, and wherein the laser beam horizontal trueness testing device (10) is configured for generating data dependent on the laser beam inclination value and for communicating said data to the laser beam projection apparatus (20), such that the beam leveling functionality, in particular beam self-leveling functionality, of the laser beam projection apparatus (20) is recalibratable on the basis of these data obtained,
in particular wherein the laser beam projection apparatus (20) is configured for self-acting automatic recalibration of its beam leveling functionality, in particular beam self-leveling functionality, on the basis of these data obtained.

15. A method for testing the laser beam horizontal trueness of a laser beam projection apparatus (20) having a beam self-leveling functionality and being configured for construction and/or interior finishing work, in particular a rotation laser or line or point laser,
wherein the method is carried out by a telescope (1) comprising
• an attenuation filter (2),
• an objective (3) having a magnifying effect and defining an optical axis (A), and
• a planar image sensor (5) arranged in an image plane (4) of the objective (3) and serving for detecting an image from a laser beam (L) incident in the objective (3),
wherein a focus is set or settable in such a way that beams running parallel to the optical axis and incident in the objective coincide and are imaged over the entire aperture of the objective in each case at a same point on the image plane and are thus detected by the image sensor in a single, identical pixel,
and wherein the method involves
• compensating for an inclination of the telescope (1),
• capturing an image from a laser beam (L) incident in the objective (3),
• determining an image position of the laser beam (L) captured in the image on the basis of image processing, and
• quantifying the laser beam horizontal trueness by means of translating the determined image position into a laser beam inclination value on the basis of a translation rule related to calibration parameters dependent on a position of the image sensor (5) in the telescope.

## Revendications

1. Dispositif de vérification de la fidélité de l'horizontalité d'un faisceau laser (10) pour un appareil de projection de faisceau laser (20) présentant une fonctionnalité de mise à l'horizontale du faisceau, en particulier une fonctionnalité de mise à l'horizontale automatique du faisceau, pour des travaux de construction et/ou d'aménagement intérieur, en particulier un laser rotatif ou un laser linéaire ou ponctuel, lequel dispositif de vérification de la fidélité de l'horizontalité d'un faisceau laser (10) présente
• un télescope (1) doté
° d'un filtre d'atténuation (2),
° d'un objectif à effet grossissant (3) qui définit un axe optique (A), et
° d'un capteur d'image plan (5) disposé dans un plan image (4) de l'objectif (3) et destiné à capturer une image d'un faisceau laser (L) incident dans l'objectif (3),
dans lequel un foyer est réglé ou réglable de telle sorte que des faisceaux s'étendant parallèlement à l'axe optique et incidents dans l'objectif sur toute l'ouverture de l'objectif se rejoignent et sont reproduits chaque fois en un même point sur le plan image, et sont ainsi détectés en un seul et même pixel par le capteur d'image,
• un compensateur d'inclinaison propre (6, 6') et
• une unité d'évaluation (7) conçue pour effectuer automatiquement
° une détermination, au moyen d'un traitement d'image, d'une position d'image du faisceau laser (L) capturé dans l'image et
° une quantification de la fidélité de l'horizontalité du faisceau laser par une conversion de la position d'image déterminée en une valeur d'inclinaison du faisceau laser à l'aide d'une règle de conversion qui est en rapport avec des paramètres d'étalonnage qui dépendent d'une position du capteur d'image (5) dans le télescope (1).

2. Dispositif de vérification de la fidélité de l'horizontalité d'un faisceau laser (10) selon la revendication 1,
**caractérisé en ce que**
le filtre d'atténuation (2) est conçu de telle sorte qu'une pluralité de degrés d'atténuation différents soit mise à disposition, parmi lesquels
• un degré d'atténuation peut chaque fois être choisi et réglé par l'utilisateur ou
• un degré d'atténuation est automatiquement sélectionné et ordonné à régler par évaluation d'une image test qui est capturée par le faisceau laser (L) incident dans l'objectif (3),
en particulier dans lequel
• le filtre d'atténuation (2) est conçu de telle sorte qu'un degré d'atténuation peut être choisi et réglé de façon continue chaque fois dans une large plage de degré d'atténuation, en particulier le filtre d'atténuation (2) présentant au moins un polarisateur linéaire disposé tournant, en particulier deux ou plusieurs polarisateurs linéaires disposés tournants l'un par rapport à l'autre,
et/ou
• le filtre d'atténuation (2) s'étend sensiblement régulièrement sur une surface de section transversale totale de l'objectif formant l'ouverture.

3. Dispositif de vérification de la fidélité de l'horizontalité d'un faisceau laser (10) selon la revendication 1 ou 2,
**caractérisé en ce que**
le télescope (1) est réalisé sans diaphragme et le capteur d'image (5) et l'objectif (3) sont disposés de façon à coopérer dans le télescope (1) de telle sorte que le capteur d'image (5) puisse détecter un faisceau laser (L) incident par au moins une large partie de la surface de section transversale de l'objectif formant l'ouverture, en particulier sensiblement par la surface de section transversale totale de l'objectif.

4. Dispositif de vérification de la fidélité de l'horizontalité d'un faisceau laser (10) selon l'une des revendications 1 à 3,
**caractérisé en ce que**
• le télescope (1) présente en outre un élément de focalisation (8) disposé après l'objectif (3) dans le trajet optique,
et/ou
• le compensateur d'inclinaison propre (6, 6') est conçu
° comme dispositif optomécanique de mise à l'horizontale automatique (6') doté d'un élément optomécanique de mise à l'horizontale automatique de l'axe optique du télescope (1) disposé dans le trajet optique du télescope (1) entre l'objectif (3) et le capteur d'image (5)
ou
° comme dispositif électronique de prise en compte de l'inclinaison doté d'un capteur d'inclinaison à haute précision pour déterminer une valeur d'inclinaison de télescope dépendant d'une position d'inclinaison actuelle du télescope (1), la valeur d'inclinaison de télescope étant prise en compte automatiquement par l'unité d'évaluation (7) lors de la conversion effectuée automatiquement de la position d'image en valeur d'inclinaison du faisceau laser.

5. Dispositif de vérification de la fidélité de l'horizontalité d'un faisceau laser (10) selon l'une des revendications 1 à 4,
**caractérisé en ce que**
les paramètres d'étalonnage mémorisés représentent
• une position de reproduction (A') de l'axe optique (A) dans l'image et en particulier une direction dans l'image qui représente une direction de décalage d'une position d'incidence du faisceau laser sur le capteur d'image (5), produite hypothétiquement par un pur défaut d'horizontalité,
• une ligne d'inclinaison nulle dans l'image, en particulier s'étendant sensiblement horizontalement dans l'image sur toute la zone d'image,
et/ou
• une table de correspondance à partir de laquelle une valeur d'inclinaison du faisceau laser associée est directement stockée pour les positions d'image respectives.

6. Dispositif de vérification de la fidélité de l'horizontalité d'un faisceau laser (10) selon la revendication 5,
**caractérisé en ce que**
pour la conversion
• une distance existante dans l'image entre la position d'image et la position de reproduction est déterminée dans la direction qui est admise comme direction ou stockée dans les paramètres d'étalonnage, qui représente une direction de décalage d'une position d'incidence du faisceau laser sur le capteur d'image (5), produite hypothétiquement par un pur défaut d'horizontalité, et cette distance est convertie en valeur d'inclinaison du faisceau laser, en particulier conformément à un facteur de conversion défini par le rapport de reproduction de l'objectif,
respectivement
• une distance existante dans l'image entre la position d'image et la ligne d'inclinaison nulle est déterminée, et cette distance est convertie en valeur d'inclinaison du faisceau laser, en particulier conformément à un facteur de conversion défini par le rapport de reproduction de l'objectif,
respectivement
• la valeur d'inclinaison du faisceau laser associée dans la table de correspondance à la position d'image déterminée est lue,
en particulier la valeur d'inclinaison du faisceau laser étant délivrée sous la forme d'un angle d'inclinaison du faisceau laser (L).

7. Dispositif de vérification de la fidélité de l'horizontalité d'un faisceau laser (10) selon l'une des revendications 1 à 6,
**caractérisé en ce que**
• pour l'unité d'évaluation (7), un motif, en particulier un modèle, pour différentes formes de section transversale de faisceau laser est chaque fois mémorisé de manière accessible dans une mémoire,
• un modèle correspondant à la forme de section transversale de faisceau laser du faisceau laser (L) incident est sélectionnable par l'utilisateur ou sélectionné automatiquement par traitement d'image avec identification de caractéristiques,
• et l'unité d'évaluation (7), lors de la détermination de la position d'image,
° met en concordance dans l'image le motif sélectionné avec le faisceau laser (L) capturé à l'aide d'une méthode de meilleur ajustement, en particulier avec une précision du sous-pixel, et
° détermine, à l'aide de la position mise en concordance du motif dans l'image, la position d'image du faisceau laser (L) capturé dans l'image, en particulier avec une précision du sous-pixel,
• en particulier, pour chaque motif mémorisé, une information étant également mémorisée, qui permet de déduire une position de motif à l'intérieur du motif, définie de manière interne au motif et à utiliser pour la détermination définitive de la position d'image, en particulier l'information étant la position de motif définie de manière interne au motif elle-même ou un algorithme défini de détermination de position de motif comme par exemple un algorithme de détermination du centre de gravité de motif.

8. Dispositif de vérification de la fidélité de l'horizontalité d'un faisceau laser (10) selon l'une des revendications 1 à 7,
**caractérisé en ce que**
le télescope (1) présente en outre un diviseur de faisceau (9) disposé dans le trajet optique pour diviser le trajet optique en un premier canal (11) et un deuxième canal (12), de telle sorte qu'un premier plan image (4) de l'objectif (3) soit produit dans le premier canal (11) et un deuxième plan image (4') de l'objectif (3) soit produit dans le deuxième canal (12), dans lequel
• le capteur d'image (5) est disposé dans le premier plan image (4) et
• une optique (13) portant un indicateur de l'axe optique, en particulier avec réticule, et un oculaire (14) placé après cette optique (13) pour l'observation au moyen de l'oeil d'un utilisateur de l'image intermédiaire produite dans le deuxième plan image (4') sont disposés dans le deuxième plan image (4').

9. Dispositif de vérification de la fidélité de l'horizontalité d'un faisceau laser (10) selon l'une des revendications 1 à 8,
**caractérisé en ce que**
le dispositif de vérification de la fidélité de l'horizontalité d'un faisceau laser (10) présente en outre une fonctionnalité de vérification de la fidélité de l'azimut d'un faisceau laser spécialement pour un appareil de projection de faisceau laser (20) réalisé de telle manière qu'il envoie un faisceau laser (L') présentant une section transversale observable sous forme de point dans une macroperspective,
dans lequel, dans le cadre de la fonctionnalité de vérification de la fidélité de l'azimut du faisceau laser, une capture d'une image du faisceau laser (L) incident dans l'objectif (3) effectuée par le capteur d'image (5) peut être déclenchée et l'unité d'évaluation (7) effectue automatiquement
• une détermination d'une position d'image du faisceau laser (L) capturé dans l'image et
• une quantification de la fidélité de l'azimut du faisceau laser par une conversion de la position d'image déterminée en une valeur de direction azimutale du faisceau laser à l'aide d'une règle de conversion dépendant des paramètres d'étalonnage mémorisés,
en particulier dans laquelle les paramètres d'étalonnage mémorisés représentent
° une position de reproduction de l'axe optique dans l'image ainsi que, en particulier, une direction dans l'image qui représente une direction de décalage d'une position d'incidence du faisceau laser sur le capteur d'image (5), produite hypothétiquement par un pur écart de direction azimutale par rapport à l'axe optique,
° une ligne d'écart azimutal nul dans l'image, s'étendant en particulier sensiblement verticalement dans l'image sur toute la zone d'image,
et/ou
° une table de correspondance à partir de laquelle une valeur de direction azimutale du faisceau laser associée est directement stockée pour les positions d'image respectives,
et pour la conversion
° une distance existante dans l'image entre la position d'image et la position de reproduction est déterminée dans la direction qui est admise comme direction ou stockée dans les paramètres d'étalonnage, qui représente une direction de décalage d'une position d'incidence du faisceau laser sur le capteur d'image (5), produite hypothétiquement par un pur écart de direction azimutale par rapport à l'axe optique, et cette distance est convertie en valeur de direction azimutale du faisceau laser, en particulier conformément à un facteur de conversion défini par le rapport de reproduction de l'objectif,
respectivement
° une distance existante dans l'image entre la position d'image et la ligne d'écart azimutal nul est déterminée, et cette distance est convertie en valeur de direction azimutale du faisceau laser, en particulier conformément à un facteur de conversion défini par le rapport de reproduction de l'objectif, respectivement
° la valeur de direction azimutale du faisceau laser associée dans la table de correspondance à la position d'image déterminée est lue,
en particulier la valeur de direction azimutale du faisceau laser étant délivrée sous la forme d'un angle du faisceau laser (L).

10. Dispositif de vérification de la fidélité de l'horizontalité d'un faisceau laser (10) selon l'une des revendications 1 à 9,
**caractérisé en ce que**
le dispositif de vérification de la fidélité de l'horizontalité d'un faisceau laser (10) présente en outre une fonctionnalité de vérification d'une fidélité de l'inclinaison du faisceau laser spécialement pour un appareil de projection de faisceau laser (20) réalisé de telle manière qu'il présente une fonction d'inclinaison de faisceau avec une inclinaison de consigne pour le faisceau laser pouvant être choisie de manière définie par l'utilisateur et en particulier pouvant, au choix, se régler automatiquement, en particulier pour un appareil de projection de faisceau laser (20) réalisé sous la forme d'un laser rotatif inclinable avec mécanisme automatique à pente simple ou double,
dans lequel, dans le cadre de la fonctionnalité de vérification de la fidélité de l'inclinaison du faisceau laser, après réglage de l'inclinaison de consigne définie pour le faisceau laser (L) sur l'appareil de projection de faisceau laser (20), une capture d'une image du faisceau laser (L) incident dans l'objectif (3) effectuée par le capteur d'image (5) peut être déclenchée et l'unité d'évaluation (7) effectue automatiquement
• une détermination d'une position d'image du faisceau laser (L) capturé dans l'image et
• une quantification de la fidélité de l'inclinaison du faisceau laser par une conversion de la position d'image déterminée en une valeur d'inclinaison du faisceau laser à l'aide d'une règle de conversion dépendant des paramètres d'étalonnage mémorisés, de telle sorte que la valeur d'inclinaison du faisceau laser ainsi obtenue puisse être comparée avec l'inclinaison de consigne réglée de manière définie sur l'appareil de projection de faisceau laser (20).

11. Dispositif de vérification de la fidélité de l'horizontalité d'un faisceau laser (10) selon l'une des revendications 1 à 10,
**caractérisé en ce que**
• l'unité d'évaluation (7) est réalisée sous la forme d'une unité de commande et d'évaluation et une fonctionnalité de vérification de la fidélité de l'horizontalité du faisceau laser se déroulant de façon totalement automatique après déclenchement est mise à disposition, dans le cadre de laquelle, commandée par l'unité de commande et d'évaluation, une capture d'une image du faisceau laser (L) incident dans l'objectif (3) effectuée par le capteur d'image (5) est ordonnée automatiquement et l'exécution de la détermination et de la quantification est ensuite démarrée automatiquement,
• en particulier dans lequel les fonctionnalités de vérification de la fidélité de l'azimut du faisceau laser, respectivement de la fidélité de l'inclinaison du faisceau laser sont également mises à disposition sous la forme de fonctionnalités se déroulant de façon totalement automatique après déclenchement et, commandée par l'unité de commande et d'évaluation (7), une capture d'une image du faisceau laser (L) incident dans l'objectif (3) effectuée par le capteur d'image (5) est ordonnée automatiquement et l'exécution de la détermination et de la quantification est ensuite démarrée automatiquement.

12. Dispositif de vérification de la fidélité de l'horizontalité d'un faisceau laser (10) selon l'une des revendications 1 à 11,
**caractérisé en ce que**
le dispositif de vérification de la fidélité de l'horizontalité d'un faisceau laser (10) présente en outre une fonctionnalité de vérification d'une fidélité du plan spécialement pour un appareil de projection de faisceau laser (20) réalisé de telle manière qu'il permet de définir un plan de référence avec le faisceau laser, en particulier pour un appareil de projection de faisceau laser (20) réalisé sous la forme d'un laser linéaire émettant un éventail laser ou d'un laser rotatif,
dans lequel, dans le cadre de la fonctionnalité de vérification de la fidélité du plan,
• une capture d'une image du faisceau laser (L) incident dans l'objectif (3) effectuée par le capteur d'image (5) peut être déclenchée et l'unité d'évaluation (7) effectue automatiquement
° une détermination, par traitement d'image, d'une information de position d'image sur une reproduction du plan de référence générée dans l'image par le faisceau laser (L) détecté, en particulier dans laquelle une position et une allure d'une ligne de plan de référence définie dans l'image par le faisceau laser (L) sont déterminées en tant qu'information de position d'image au moyen d'un traitement de l'image, et
° une quantification de la fidélité du plan en fonction de l'information de position d'image déterminée ainsi qu'en fonction des paramètres d'étalonnage mémorisés,
et/ou
• à différents points du plan de référence, des images du faisceau laser (L) incident dans l'objectif (3) aux points du plan de référence respectifs peuvent être respectivement capturées par le capteur d'image (5) et l'unité d'évaluation (7) effectue automatiquement
° une détermination d'une position d'image respective du faisceau laser (L) respectivement capturé pour les plusieurs images respectives et
° une quantification de la fidélité du plan par agrégation des positions d'image déterminées respectives, en particulier en tenant compte des points du plan de référence respectifs auxquels les images respectives sont capturées, ainsi qu'en fonction des paramètres d'étalonnage mémorisés.

13. Dispositif de vérification de la fidélité de l'horizontalité d'un faisceau laser (10) selon l'une des revendications 1 à 12,
**caractérisé en ce que**
le dispositif de vérification de la fidélité de l'horizontalité d'un faisceau laser (10) présente en outre une fonctionnalité de vérification d'une fidélité de la verticalité du plan spécialement pour un appareil de projection de faisceau laser (20) réalisé de telle manière qu'il permet de définir un plan vertical à l'aide du faisceau laser émis, en particulier pour un appareil de projection de faisceau laser (20) réalisé sous la forme d'un laser rotatif avec fonctionnalité de position couchée ou de laser linéaire émettant un éventail laser vertical,
dans lequel, dans le cadre de la fonctionnalité de vérification de la fidélité de la verticalité du plan, une capture d'une image du faisceau laser (L) incident dans l'objectif (3) effectuée par le capteur d'image (5) peut être déclenchée et l'unité d'évaluation (7) effectue automatiquement
• une détermination, par traitement d'image, d'une information de position d'image sur une reproduction du plan vertical générée dans l'image par le faisceau laser (L) détecté, en particulier dans laquelle une position et une allure d'une ligne de plan définie dans l'image par le faisceau laser (L) sont déterminées en tant qu'information de position d'image au moyen d'un traitement de l'image, et
• une quantification de la fidélité de la verticalité en fonction de l'information de position d'image déterminée ainsi qu'en fonction des paramètres d'étalonnage mémorisés, en particulier par comparaison de l'allure de la ligne de plan avec une direction dans l'image qui représente une direction de décalage d'une position d'incidence du faisceau laser sur le capteur d'image (5), produite hypothétiquement par un pur écart de direction d'élévation par rapport à l'axe optique.

14. Système (100) composé d'un dispositif de vérification de la fidélité de l'horizontalité d'un faisceau laser (10) selon l'une des revendications 1 à 13 et d'un appareil de projection de faisceau laser (20) présentant une fonctionnalité de mise à l'horizontale automatique du faisceau, pour des travaux de construction et/ou d'aménagement intérieur, en particulier un laser rotatif ou un laser linéaire ou ponctuel,
en particulier dans lequel le dispositif de vérification de la fidélité de l'horizontalité d'un faisceau laser (10) et l'appareil de projection de faisceau laser (20) présentent chacun une interface de communication de données, et dans lequel le dispositif de vérification de la fidélité de l'horizontalité d'un faisceau laser (10) est conçu pour générer des données dépendant de la valeur d'inclinaison du faisceau laser et pour communiquer ces données à l'appareil de projection de faisceau laser (20), de telle sorte que la fonctionnalité de mise à l'horizontale du faisceau, en particulier la fonctionnalité de mise à l'horizontale automatique du faisceau, de l'appareil de projection de faisceau laser (20) puisse être réétalonnée à l'aide de ces données reçues,
en particulier dans lequel l'appareil de projection de faisceau laser (20) est conçu pour le réétalonnage automatique spontané de sa fonctionnalité de mise à l'horizontale du faisceau, en particulier de sa fonctionnalité de mise à l'horizontale automatique du faisceau, à l'aide de ces données reçues.

15. Procédé de vérification de la fidélité de l'horizontalité du faisceau laser d'un appareil de projection de faisceau laser (20) présentant une fonctionnalité de mise à l'horizontale automatique du faisceau, lequel est conçu pour des travaux de construction et/ou d'aménagement intérieur, en particulier d'un laser rotatif ou d'un laser linéaire ou ponctuel,
lequel procédé est mis en oeuvre avec un télescope (1) qui présente
• un filtre d'atténuation (2),
• un objectif à effet grossissant (3) qui définit un axe optique (A), et
• un capteur d'image plan (5) disposé dans un plan image (4) de l'objectif (3) et destiné à capturer une image d'un faisceau laser (L) incident dans l'objectif (3), dans lequel un foyer est réglé ou réglable de telle sorte que des faisceaux s'étendant parallèlement à l'axe optique et incidents dans l'objectif sur toute l'ouverture de l'objectif se rejoignent et sont reproduits chaque fois en un même point sur le plan image, et sont ainsi détectés en un seul et même pixel par le capteur d'image,
et dans le cadre duquel procédé ont lieu
• une compensation d'une inclinaison du télescope (1),
• une capture d'une image d'un faisceau laser (L) incident dans l'objectif (3),
• une détermination d'une position d'image du faisceau laser (L) capturé dans l'image au moyen d'un traitement d'image et
• une quantification de la fidélité de l'horizontalité du faisceau laser par une conversion de la position d'image déterminée en une valeur d'inclinaison du faisceau laser à l'aide d'une règle de conversion qui est en rapport avec des paramètres d'étalonnage qui dépendent d'une position du capteur d'image (5) dans le télescope.
